(19) Europäisches Patentamt
European Patent Office
Office européen des brevets

(11) EP 4 378 640 A1

(12) EUROPEAN PATENT APPLICATION
published in accordance with Art. 153(4) EPC

(43) Date of publication:
05.06.2024 Bulletin 2024/23

(21) Application number: 22849191.6

(22) Date of filing: 07.07.2022

(51) International Patent Classification (IPC):
B25J 13/02 (2006.01)     H04M 1/11 (2006.01)

(52) Cooperative Patent Classification (CPC):
B25J 13/02; H04M 1/11

(86) International application number:
PCT/JP2022/026921

(87) International publication number:
WO 2023/008126 (02.02.2023 Gazette 2023/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.07.2021 JP 2021121147

(71) Applicant: Idec Corporation
Osaka-shi, Osaka 532-0004 (JP)

(72) Inventors:
• OISHI Momomi
  Osaka-shi Osaka 532-0004 (JP)
• NAKANO Yoshihide
  Osaka-shi Osaka 532-0004 (JP)
• TANAKA Hiroki
  Osaka-shi Osaka 532-0004 (JP)
• YASUKAWA Kenichi
  Osaka-shi Osaka 532-0004 (JP)

(74) Representative: Whitlock, Holly Elizabeth Ann
Maucher Jenkins
Seventh Floor Offices
Artillery House
11-19 Artillery Row
London SW1P 1RT (GB)

(54) **HAND-HELD DEVICE**

(57)     The handheld device further reduces a burden on a body of an operator during operation. The table holder 1 for detachably holding the tablet T includes a holder body 2 having a base surface 20 on a frontside thereof for the tablet T to be disposed, a grip part 3 for the operator to grip by hand that is disposed on a backside of the holder body 2 and that is provided rotatably to take at least two orientations, and a support part 4 that is disposed on the backside of the holder body 2 and that is supported from below by at least a portion of a forearm Fa of the operator P.

FIG. 19

EP 4 378 640 A1

**Description**

TECHNICAL FIELD

The present invention relates generally to a handheld device for detachably holding a portable terminal.

BACKGROUND ART

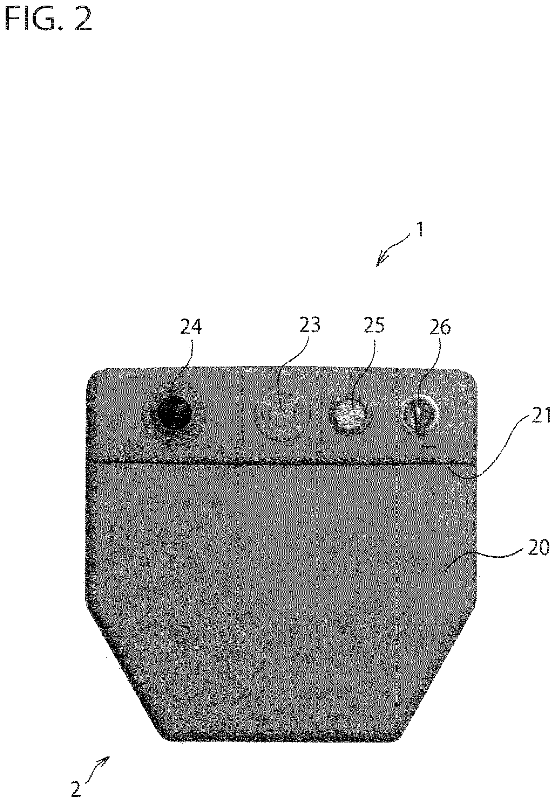

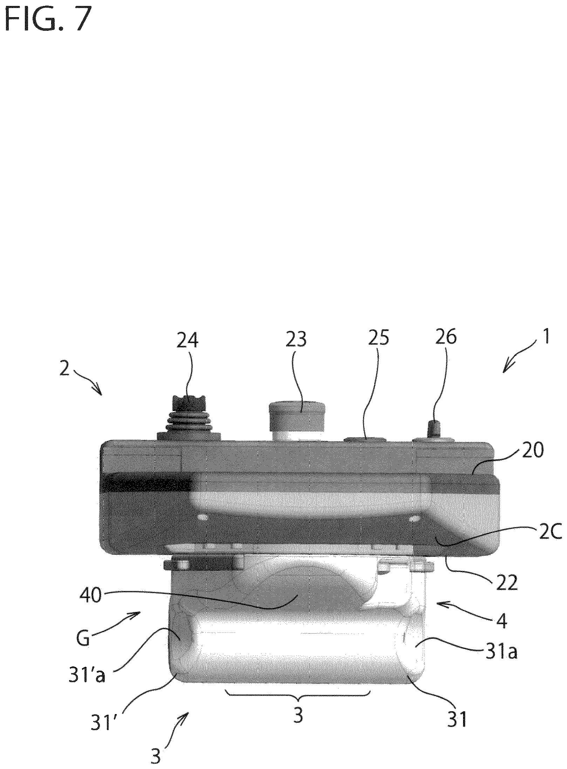

Japanese patent application publication No. 2021-79539 discloses a handheld device (1) that outputs a control signal to a controller or a control equipment of an industrial robot. The handheld device (1) includes a holder part (4) for holding a tablet, a smartphone or the like and a grip part (3) rotatable at a bottom portion of the holder part (4) for an operator (H) to grip. The grip part (3) is sized to be fit into a palm of the operator (H) (see paragraphs [0021] to [0023], [0040], FIGS.2 and 7).

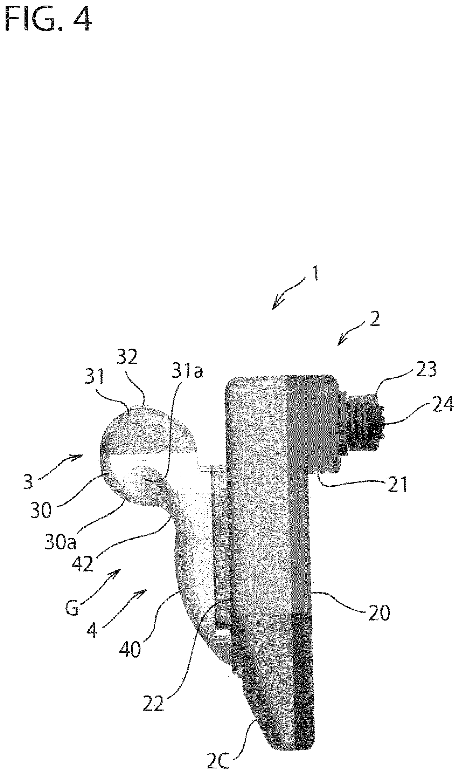

When using the aforesaid handheld device (1), the tablet (2) is held by the holder part (4) (see FIG. 4) and the operator (H) operates the tablet (2) with the grip part (3) gripped by an operator's hand. At this time, since the operator(H) grips the grip part (3) with his/her palm turned upward, the device (1) can be supported stably from below (see paragraphs [0040] to [0041]).

Also, a safety switch device (21) as shown in Japanese patent application publication No. 2021-11002 includes a fixing mechanism to fix a portable terminal (6), the fixing mechanism has a grip part (34) for a worker to grip by hand, and the grip part (34) has a contact surface (34a) for a worker's palm to contact (see paragraphs [0022], [0032] and FIG. 4). The contact surface (34a) is provided with a belt (61a, 61b) to press a worker's hand (78) toward the grip part (34) (see paragraph [0040] and FIG. 4).

When using the aforesaid safety switch device (21), the worker grips the grip part (34) by hand (78) and thereafter he/she operates the portable terminal (6) with his/her hand fixedly pressed toward the contact surface (34a) of the grip part (34) through the belt (61a, 61b). The above-mentioned publication describes that the worker can hold the device (21) stably by hand (78) without separating the hand (78) from the grip part (34) (see paragraph [0041] and FIG. 4).

**PRIOR ART REFERENCES**

**Patent Documents**

Patent Document 1: Japanese patent application publication No. 2021-79539 (see paragraphs [0021] to [0023], [0040] to [0041], FIGS. 2 and 7).
Patent Document 2: Japanese patent application publication No. 2021-11002 (see paragraphs [0022], [0032], [0040] to [0041], FIG. 4).

**SUMMARY OF THE INVENTION**

Objects to be Achieved by the Invention

In the prior-art device of the above-mentioned Japanese patent application publication No. 2021-79539, in use of the device, the weight of the holder part (4) and the tablet (2) can be supported stably from below by the palm of the operator (H) and thus the burden on an operator's body can be relieved. However, when the tablet (2) grows in size ant its weight becomes heavy, a large moment of force acts on a wrist or a forearm of the operator (H). As a result, during a prolonged use, the burden on the body of the operator (H) is liable to increase.

Also, in the prior-art device of the above-mentioned Japanese patent application publication No. 2021-11002, in use of the device, since the weight of the fixing mechanism and the portable terminal (6) is supported by the palm of the worker, similarly, as the portable terminal (6) increases in size, a large moment of force acts onto a wrist or a forearm of the worker . As a result, during a prolonged use, the burden on the body of the operator (H) is increased.

The present invention has been made in view of these circumstances and its object is to provide a handheld device that can further reduce a burden on a body of an operator during operation. Especially, the present invention is directed to reducing the burden on an arm of the operator when operating a large-sized portable terminal or using it for a prolonged time.

**Means of Achieving the Objects**

A handheld device according to the present invention is a device for detachably holding a portable terminal. The device includes a device body having a base surface on a frontside thereof for the portable terminal to be disposed, a grip part for an operator to grip by hand that is disposed on a backside of the device body and that is provided to take at least two orientations, and a support part that is disposed on the backside of the device body and that is supported from below by at least a portion of a forearm of the operator.

In the present invention, since the support part in addition to the grip part is provided at the backside of the device body, when the portable terminal is placed at the base surface on the frontside of the device body and the operator grips the grip part by hand, the weight of the entire device is supported not only by the hand of the operator through the grip part but also by at least a portion of the forearm of the operator through the support part. Thereby, a load can be dispersed to the hand and the forearm of the operator, and a moment of force acting to the forearm can be decreased, thus further relieving the burden to the operator during operation. Especially when the portable terminal becomes large or during a prolonged use, the burden to the arm of the operator can be alleviated. Moreover, according to the present invention, since the grip part is adapted to take at least two orientations at the backside of the device body, the operator can support the portable terminal stably in either orientation of a lateral and longitudinal orientation, and can also grip the grip part with either hand of a left hand or a right hand. By so doing as well, the burden to the body of the operator can be further eased.

There may be provided on the frontside of the device body a contact part for a side surface of the portable terminal to contact. The grip part may be rotatable by a predetermined angle from left to right across a neutral position disposed parallel to an arrangement direction of the contact part, and may take a first orientation and a second orientation that intersect diagonally with one another.

The grip part may be rotatable around a center position or its nearby position of the device body.

There may be provided on the frontside of the device body a contact part for a side surface of the portable terminal to contact. The grip part may be fixed to the backside of the device body and may comprise a first grip part disposed in a direction that intersects an arrangement direction of the contact part and a second grip part disposed in a direction that diagonally intersects the first grip part and that intersects the arrangement direction of the contact part.

The grip part may include a grip body extending in a longitudinal direction to be gripped by a second to fifth finger of the operator and a fitting recess formed at a side portion of the grip body for a first finger of the operator to fit in.

The support part may be configured and adapted to contact at least a wrist of the operator.

The support part may extend in a direction perpendicular to the grip part on the backside of the device body.

The support part may be integrally formed with the grip part.

The grip part may be rotatable around a center position or its nearby position of the device body along with the support part.

The support part may be provided separately from the grip part.

The support part may be fixed to the device body.

The device body may include an operation input part to receive an input operation by the operator.

A handheld device according to the present invention is a device for detachably holding a portable terminal. The device incudes a device body having a base surface on a frontside thereof for the portable terminal to be disposed, a grip part for an operator to grip by hand that is disposed on a backside of the device body and that is provided to take at least two orientations, and a stop switch that is disposed oppositely to the grip part in an up-down direction on the frontside of the device body and that outputs a stop signal to an operational object of the device body.

According to the present invention, since the grip part is adapted to take at least two orientations at the backside of the device body, the operator can support the portable terminal stably in either orientation of a lateral orientation or a longitudinal orientation, and can grip the grip part with either hand of a left hand or a right hand. By so doing, the burden to the body of the operator can be further eased. Also, according to the present invention, since the stop switch is disposed oppositely to the grip part in the up-down direction, when the operator operates the stop switch with one hand that is disposed on the frontside of the device body, as a downward pressing load is applied to the stop switch, such a downward pressing load is supported from below by the other hand of the operator who grips the grip part disposed on the backside of the device body. Thereby, at the time of operating the stop switch, a moment load by the downward pressing load imparted to the stop switch is prevented from acting to the handheld device, such that thereby the burden to the body of the operator can be further eased.

The stop switch may be disposed oppositely to a metacarpophalangeal joint of an operator' hand in an up-down direction in the state that the grip part is gripped by the operator's hand.

In this case, when the operator operates the stop switch with one hand, as a downward pressing load is applied to the stop switch, such a downward pressing load is supported from below by the metacarpophalangeal joint of the other hand of the operator who grips the grip part. Thereby, at the time of operating the stop switch, since the downward pressing load imparted to the stop switch can be supported by around the base of fingers, the downward pressing load can be stably supported thus further alleviating the burden to the operator's body.

**Effects of the Invention**

As mentioned above, according to the handheld device of the present invention, the burden to the operator's body during operation can be further eased. Especially when the portable terminal becomes large or during a prolonged use, the burden to the arm of the operator can be alleviated.

**BRIEF DESCRIPTION OF THE DRAWINGS**

FIG. 1 is a general perspective view of a handheld device on a front side thereof according to a first embodiment of the present invention;

FIG. 2 is a front elevational view (or a frontside view) of the handheld device of FIG. 1;

FIG. 3 is a rear elevational view (or a backside view) of the handheld device of FIG. 1;

FIG. 4 is a left-side view of the handheld device of FIG. 1;

FIG. 5 is a right-side view of the handheld device of FIG. 1;

FIG. 6 is a top plan view of the handheld device of FIG. 1;

FIG. 7 is a bottom plan view of the handheld device of FIG. 1;

FIG. 8 is a general perspective view of the handheld device of FIG. 1 on a rear side thereof;

FIG. 9 is a general perspective view of the handheld device of FIG. 1 on the front side thereof with a portable terminal held;

FIG. 10 is a front elevational view (or a front-side view) of the handheld device of FIG. 1 with the portable terminal held;

FIG. 11 is a rear elevational view (or a backside view) of the handheld device of FIG. 1 with the portable terminal held;

FIG. 12 is a left-side view of the handheld device of FIG. 1 with the portable terminal held;

FIG. 13 is a right-side view of the handheld device of FIG. 1 with the portable terminal held;

FIG. 14 is a top plan view of the handheld device of FIG. 1 with the portable terminal held;

FIG. 15 is a bottom plan view of the handheld device of FIG. 1 with the portable terminal held;

FIG. 16 is a general perspective view of the handheld device of FIG. 1 on the rear side thereof with the portable terminal held;

FIG. 17 is a rear elevational view (or a backside view) of the handheld device of FIG. 1 that shows the state in which a grip unit is adapted to be rotatable relative to a device body and the grip unit is rotated toward one side across a neutral position;

FIG. 18 is a rear elevational view (or a backside view) of the handheld device of FIG. 1 that shows the state in which the grip unit is adapted to be rotatable relative to the device body and the grip unit is rotated toward the other side across the neutral position;

FIG. 19 is a top plan view of the handheld device of FIG. 1 that shows the state in which the grip unit is rotated toward one side and gripped with a left hand of an operator;

FIG. 20 is a top plan view of the handheld device of FIG. 1 that shows the state in which the grip unit is rotated toward the other side and gripped with a right hand of the operator;

FIG. 21 is a left-side view of the handheld device of FIG. 1 with the portable terminal held, in which the grip unit is gripped with the left hand of the operator;

FIG. 22 is a right-side view of the handheld device of FIG. 1 with the portable terminal held, in which the grip unit is gripped with the right hand of the operator;

FIG. 23 is a right-side view of the handheld device of FIG. 1 that shows a usage example in which the handheld device is disposed and used on a desk;

FIG. 24 is a rear elevational view (or a backside view) of the handheld device of FIG. 1 that shows the state in which a support part of the grip unit is provided separately from a grip part and fixed to the device body, and the grip part is adapted to be rotatable relative to the support part across the neutral position;

FIG. 25 is a general perspective view of a handheld device on a front side thereof according to a second embodiment of the present invention;

FIG. 26 is a front elevational view (or a frontside view) of the handheld device of FIG. 25;

FIG. 27 is a rear elevational view (or a backside view) of the handheld device of FIG. 25;

FIG. 28 is a left-side view of the handheld device of FIG. 25;

FIG. 29 is a right-side view of the handheld device of FIG. 25;

FIG. 30 is a top plan view of the handheld device of FIG. 25;

FIG. 31 is a bottom plan view of the handheld device of FIG. 25;

FIG. 32 is a general perspective view of the handheld device of FIG. 25 on a rear side thereof;

FIG. 33 is a general perspective view of the handheld device of FIG. 25 on the front side thereof with a portable terminal held;

FIG. 34 is a front elevational view (or a frontside view) of the handheld device of FIG. 25 with the portable terminal held;

FIG. 35 is a rear elevational view (or a backside view) of the handheld device of FIG. 25 with the portable terminal held;

FIG. 36 is a left-side view of the handheld device of FIG. 25 with the portable terminal held;

FIG. 37 is a right-side view of the handheld device of FIG. 25 with the portable terminal held;

FIG. 38 is a top plan view of the handheld device of FIG. 25 with the portable terminal held;

FIG. 39 is a bottom plan view of the handheld device of FIG. 25 with the portable terminal held;

FIG. 40 is a general perspective view of the handheld device of FIG. 25 on the rear side thereof with the portable terminal held;

FIG. 41 is a front elevational view (or a frontside view) of a handheld device according to a third embodiment of the present invention;

FIG. 42 is a rear elevational view (or a backside view) of the handheld device of FIG. 41;

FIG. 43 is a left-side view of the handheld device of FIG. 41;

FIG. 44 is a right-side view of the handheld device of FIG. 41;

FIG. 45 is a top plan view of the handheld device of FIG. 41;

FIG. 46 is a bottom plan view of the handheld device of FIG. 41;

FIG. 47 is a general perspective view of the handheld device of FIG. 41 on a front side thereof with a portable terminal held;

FIG. 48 is a front elevational view (or a frontside view) of the handheld device of FIG. 41 with the portable terminal held;

FIG. 49 is a rear elevational view (or a backside view) of the handheld device of FIG. 41 with the portable terminal held;

FIG. 50 is a left-side view of the handheld device of FIG. 41 with the portable terminal held;

FIG. 51 is a right-side view of the handheld device of FIG. 41 with the portable terminal held;

FIG. 52 is a general perspective view of the handheld device of FIG. 41 on the rear side thereof with the portable terminal held;

FIG. 53 is a front elevational view (or a frontside view) of a handheld device according to a fourth embodiment of the present invention, also illustrating a left hand of an operator who grips a grip unit on a rear-side (or a backside) of the handheld device;

FIG. 54 is a rear elevational view (or a backside view) of the handheld device of FIG. 53;

FIG. 55 is a rear elevational view (or a backside view) of the handheld device of FIG. 53 that shows the state in which a grip unit is adapted to be rotatable relative to a device body and the grip unit is rotated toward one side across a neutral position, also illustrating a portable terminal held by the handheld device;

FIG. 56 is a rear elevational view (or a backside view) of the handheld device of FIG. 53 that shows the state in which the grip unit is adapted to be rotatable relative to the device body and the grip unit is rotated toward the other side across the neutral position, also illustrating the portable terminal held by the handheld device;

FIG. 57 also illustrates an emergency stop switch on a frontside of the handheld device of FIG. 54;

FIG. 58 also illustrates the emergency stop switch on the frontside of the handheld device of FIG. 55;

FIG. 59 also illustrates the emergency stop switch on the frontside of the handheld device of FIG. 56; and

FIG. 60 is a right-side view of the handheld device of FIG. 53, explaining a positional relation between a downward pressing load acting onto the emergency stop switch and a position of an MP joint (or a metacarpophalangeal joint) of an operator's hand that grips a grip part of the grip unit.

## BEST MODE FOR CARRYING OUT THE INVENTION

Embodiments of the present invention will be described below with reference to the accompanying drawings.

In the respective embodiments, a tablet is taken as an example for a portable terminal (or a remotely operable terminal) of the present invention and a handheld device is referred to a table holder. However, the portable terminal of the present invention may include not only a tablet but also a tablet PC (personal computer), a tablet terminal, a smartphone, a smart device, a mobile terminal, a mobile device, a small-sized laptop computer, and the like.

<First Embodiment>

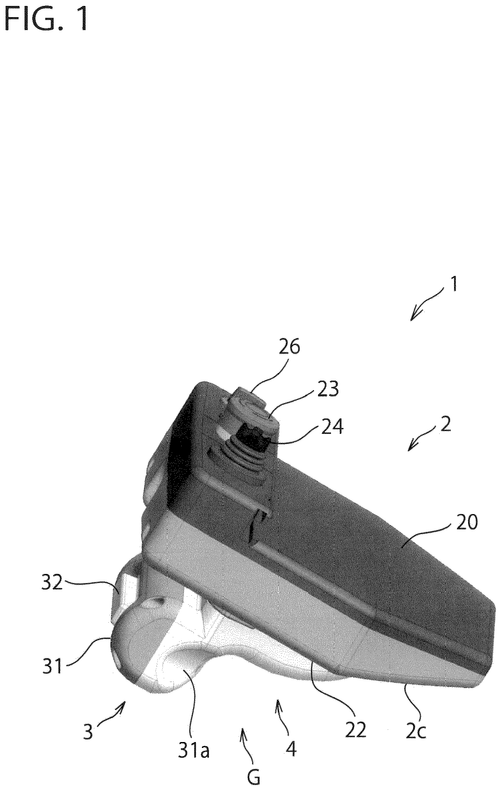

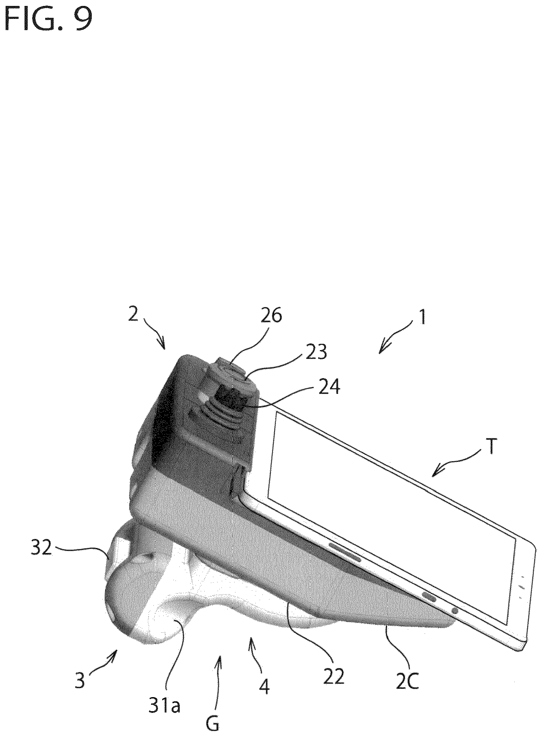

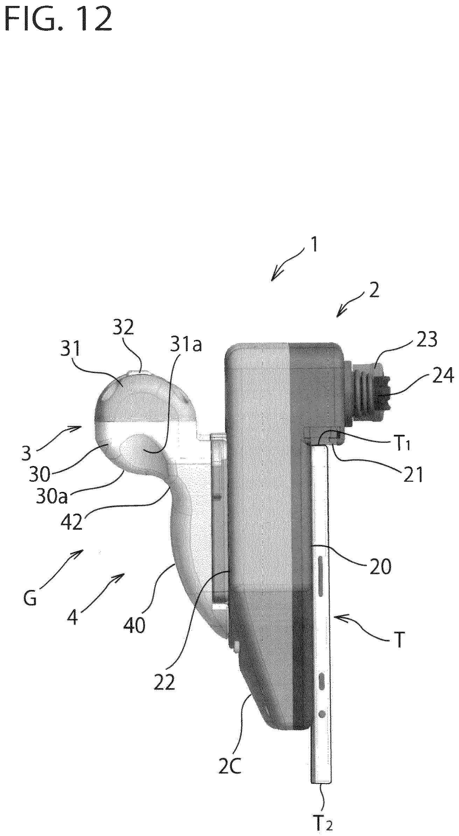

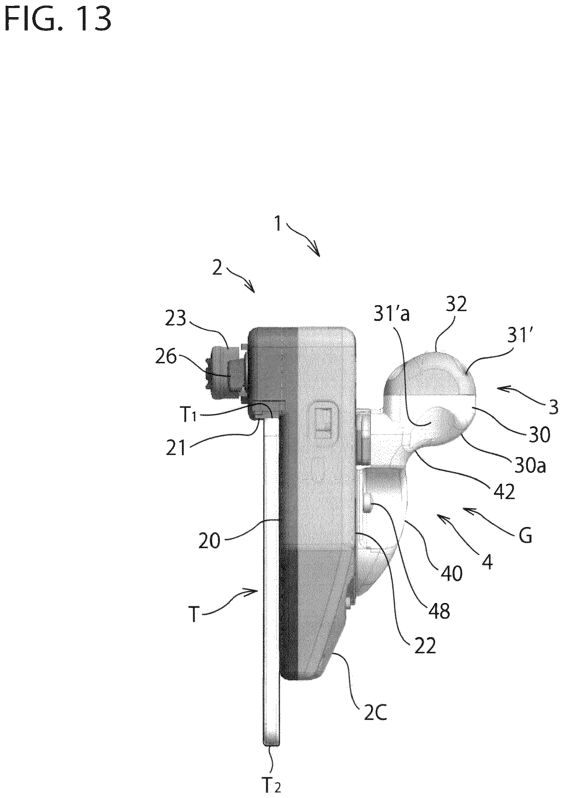

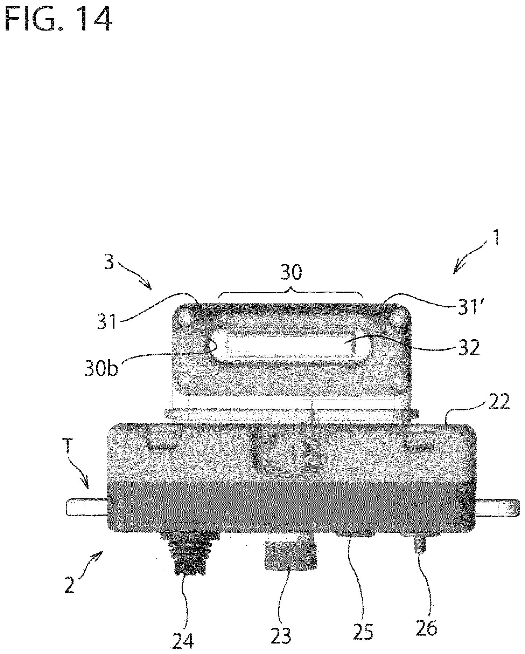

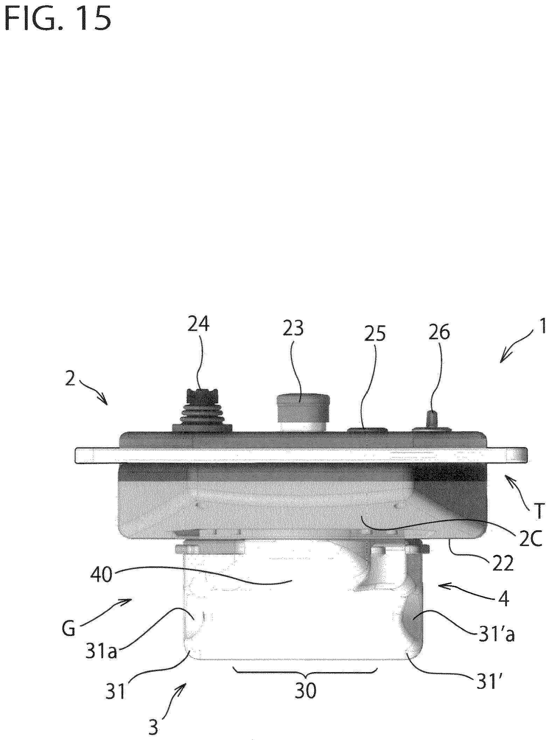

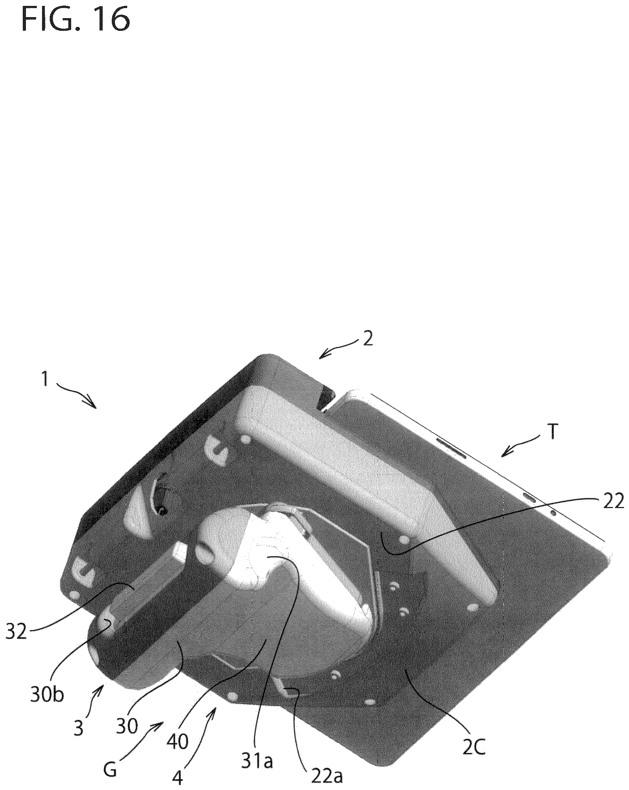

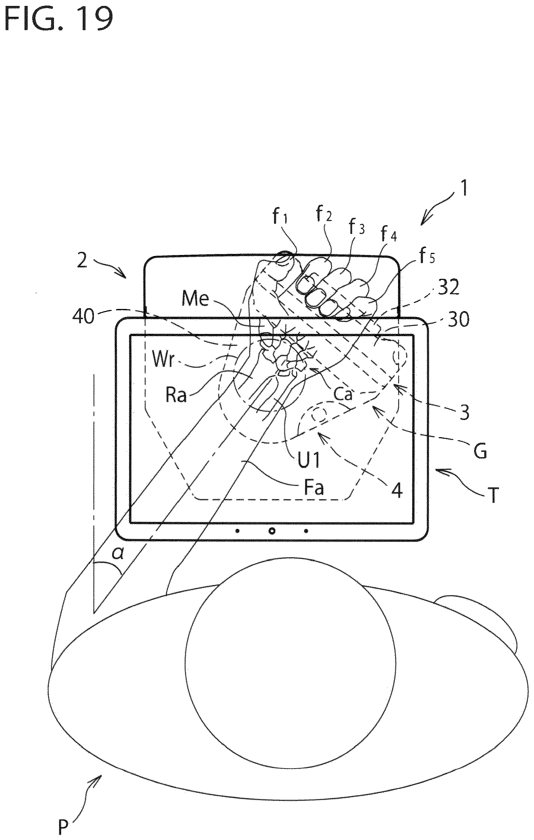

FIGS. 1 to 24 show a tablet holder according to a first embodiment of the present invention. In these drawings, FIGS. 1-8, 17, 18 and 24 are external views of a tablet holder alone, FIGS. 9-16 are external views showing the state in which a tablet is held by the tablet holder, and FIGS. 19-23 illustrate a usage state of the tablet holder.

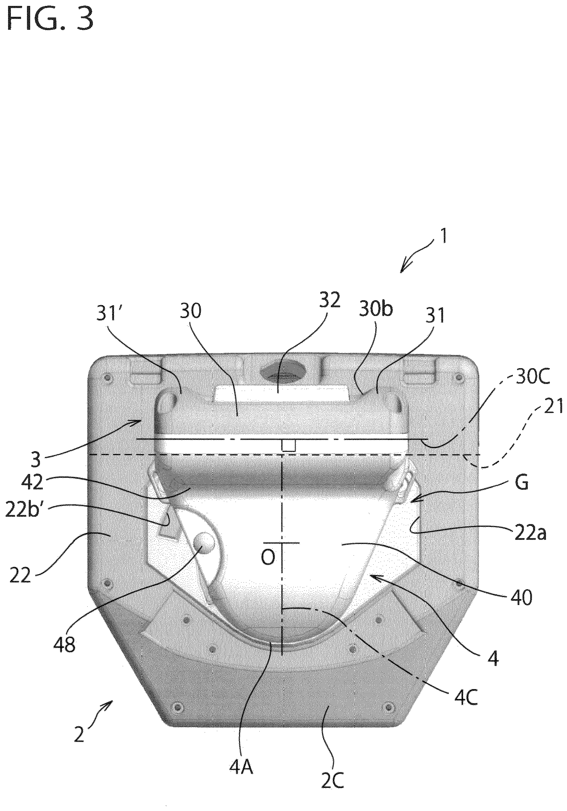

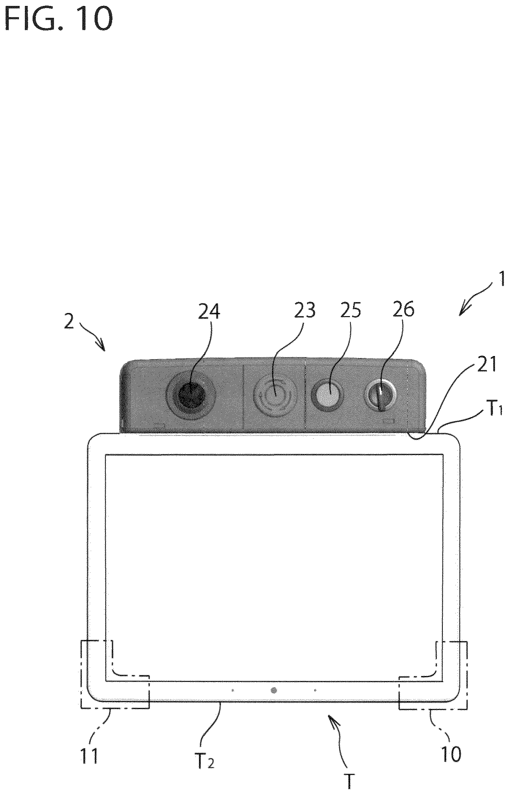

For explanatory convenience, in the following explanations, "a frontside" of the tablet holder designates a side that the tablet is placed as shown in FIGS. 2 and 10. "A rear side" of the tablet holder designates a side that a grip unit is disposed as shown in FIGS. 3, 11, 17, 18 and 24. Also, "an upper side" and "upper" designate "an upper side" and "upper" as viewed from a frontside or a rear side of the tablet holder, and "a lower side" and "lower" designate "a lower side" and "lower" as viewed similarly from the frontside or the rear side of the tablet holder.

As shown in FIGS. 1-16, a tablet holder 1 is designed to hold a tablet T detachably. The tablet T is used to output a signal (i.e. operation signal or control signal, etc.) to an external instrument such as a controller for a robot, a control instrument for other machines, etc. Also, the tablet T is not limited to a dedicated tablet for such an external instrument, but it may be a commercial tablet that app (i.e. application software) is installed.

The tablet holder 1 includes a holder body (or a device body) 2 that has a base surface 20 for the tablet T to be disposed on a front side of the holder body 2, a grip part 3 disposed on a rear side of the holder body 2 for an operator to grip with a hand, and a support part 4 that is disposed on the rear side of the holder body 2 and that is supported from below by at least a portion of a forearm of the operator when the operator grips the grip part 3 with a hand. Here, the support part 4 is integrated with the grip part 3 to form a grip unit G as a whole.

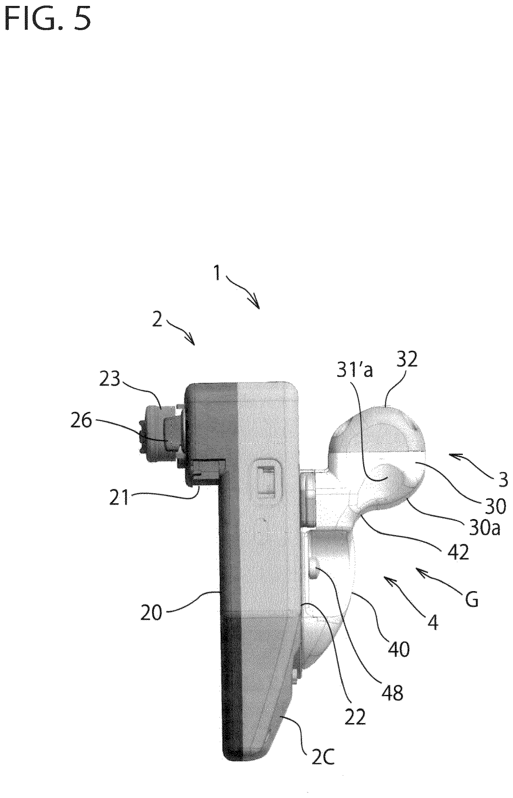

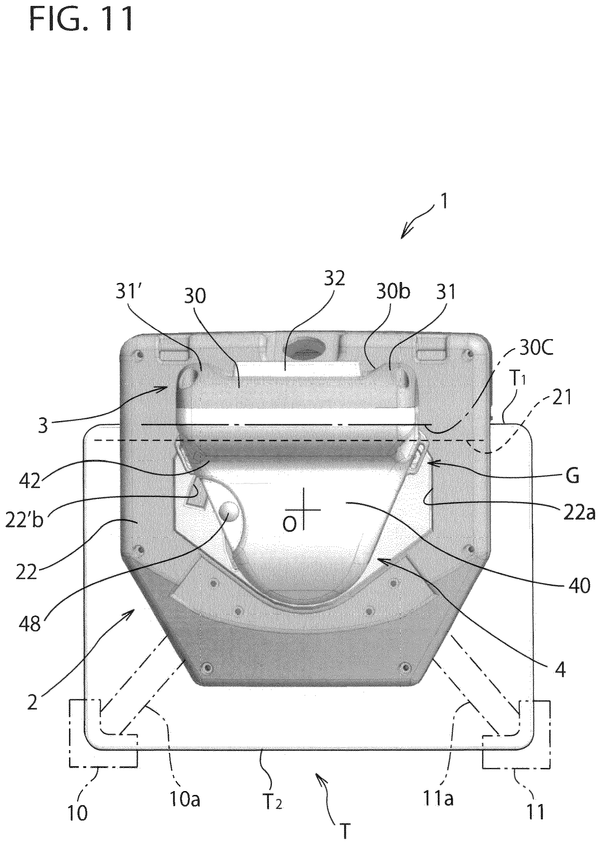

On the front side of the holder body 2, as shown in FIGS. 2 and 10, there is provided a contact part 21 that an upper side surface $T_1$ of the tablet T contacts. On the rear side of the holder body 2, as shown in FIGS. 3-5, there is formed a tapered surface 2C whose height (or a lateral or horizontal length in FIGS. 4 and 5) is gradually decreased toward a lower end of the holder body 2. Also, on the rear side of the holder body 2, as shown in FIGS. 10 and 11, there are provided a pair of retaining members 10, 11 for detachably retaining a pair of corners on a lower side surface $T_2$ of the tablet T. Each of the retaining members 10, 11 is fixedly attached to an end of the respective bands 10a, 10b and the other end of the respective bands 10a, 10b are fitted to the holder body 2. The respective bands 10a, 10b may have a longitudinal elasticity or stretchability. In the other drawings, for illustration purposes, the retaining members 10, 11 and the bands 10a, 10b are not shown. In addition, a retaining member for retaining the lower side surface $T_2$ of the tablet T is not limited to the retaining members 10, 11 and to a member for holding the tablet T in a diagonal direction like the retaining members 10, 11. Such a member as to hold the tablet T in an opposite side direction may be employed and any other suitable mechanism can be adopted.

Next, the details of the grip part 3 and the support part 4 will be explained.

The grip part 3, as shown in FIGS. 3-5, includes a grip body part 30 that extends in a longitudinal direction (or in the left to right direction in FIG. 3) . A longitudinal center line 30C of the grip body part (that is, an arrangement direction of the grip body part 30) is parallel to the contact part 21 on the front side of the holder body 2. The grip body part 30 is a part adapted to be gripped by a second to fifth fingers of the operator and has an outer circumferential surface 30a of a generally convexly circular arc-shape (or round shape) as viewed from the side. Side portions 31, 31' disposed on opposite sides of the grip body part 30 protrude upwardly (or in an upper direction in FIG. 3) from the grip body part 30 and respectively have a fitting recess 31a, 31'a that a first finger of the operator fits in. The fitting recess 31a corresponds to a first finger of a left hand of the operator and the fitting recess 31'a corresponds to a first finger of a right hand of the operator.

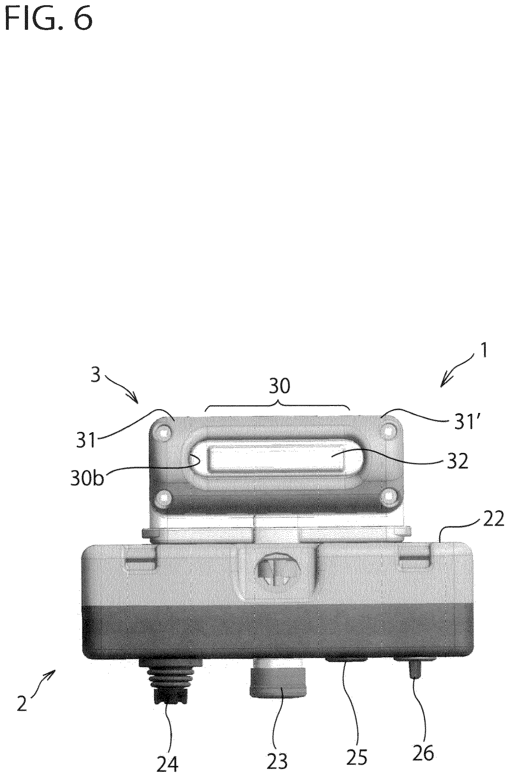

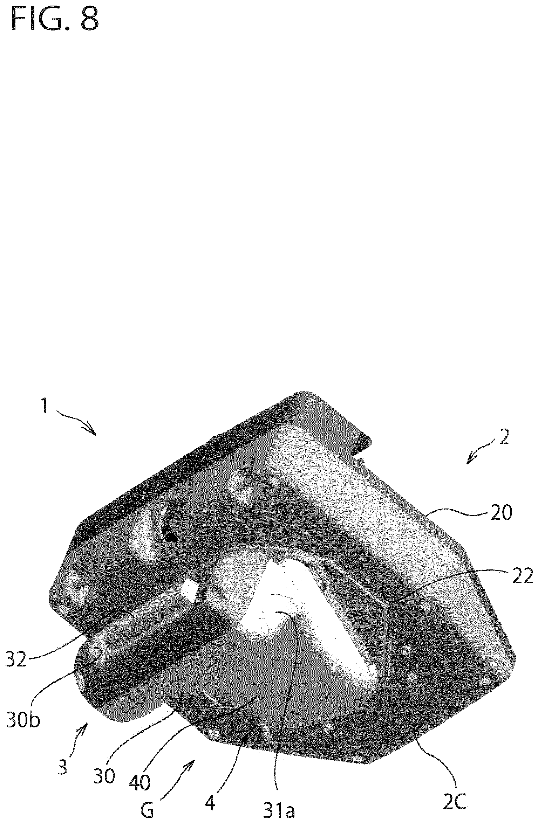

At a top portion of the grip body part 30, as shown in FIGS. 6 and 8, a longitudinally extending concave portion 30b is formed. An enable switch 32 is provided in the concave portion 30b. The enable switch 32 is formed of a push button adapted to be push-operated by the second to fifth fingers of the operator. In this exemplification, since the enable switch 32 extends in the longitudinal direction and contacts any of the second to fifth fingers of the operator, operability of the enable switch 32 is improved. The enable switch 32 is structured in such a way that when the push button is not pressed its contact is off and it does not output a signal to an external instrument, when the push button is slightly pushed from this state its contact is on and it outputs a signal to the external instrument to allow for a teaching work and the like, and when the operator releases the fingers from the push button a signal output to the external equipment is stopped. Also, in the enable switch 32, when the push button is strongly pressed from the state in which the push button is slightly pressed, the contact turned off and the signal output to the external equipment is stopped.

As shown in FIG. 3, the support part 4 is formed integrally with the grip body part 30 and extends in a direction perpendicular to the longitudinal centerline 30C of the grip body part 30. A centerline 4C of the support part 4 passes through a center O (or its nearby position) of the holder body 2 and is orthogonal to the centerline 30C of the grip body part 3. The distal end of the support part 4 is formed with a circular arc-shaped surface 4A, and the external shape of the support part 4 is formed of a generally triangular shape. The support part 4 has a contact surface 40 that at least a portion of a forearm of the operator comes into contact with when the operator grips the grip part 3 with hand. The contact surface 40, as shown in FIGS. 4 and 5, is formed of a convexly curved surface. The convexly curved surface protrudes the most at the center O and its nearby regions of the holder body 2 to have the maximum height (or lateral length in FIGS. 4, 5), and gradually decreases its height toward the distal end of the support part 4. Also, a concavely curved surface 42 smoothly connects between the convexly curved surface of the contact surface 40 and the generally convexly circular arc-shaped outer circumferential surface 30a of the grip body part 30.

As shown in FIG. 3, a grip unit G in which the aforementioned grip part 3 and support part 4 are integrally formed has a generally pentagonal external shape. The grip unit G is provided rotatably around the center O of the holder body 2 at a rear surface 22 or a concave portion 22a formed on the rear surface 22 of the holder body 2. For example, there may be provided at either one of the holder body 2 and the grip unit G a support shaft (not shown) whose center coincides with the center O of the holder body 2, and there may be provided a shaft hole (not shown) at the other one of the holder body 2 and the grip unit G in which the support shaft is rotationally slidable. In that case, the support shaft may be so structured as to rotate through a ratchet mechanism (not shown).

As explained using FIG. 3, when the longitudinal centerline 30C of the grip body part 30 of the grip part 3 is disposed parallel to the contact part 21 of the holder body 2, the centerline 4C of the support part 4 passes through the center O of the holder body 2 and is orthogonal to the centerline 30C of the grip body part 3. At this time, the grip unit G is disposed at a neutral position. The grip unit G is rotatable at a predetermined angle in the left to right direction across the neutral position (that is, in the counterclockwise direction and the clockwise direction).

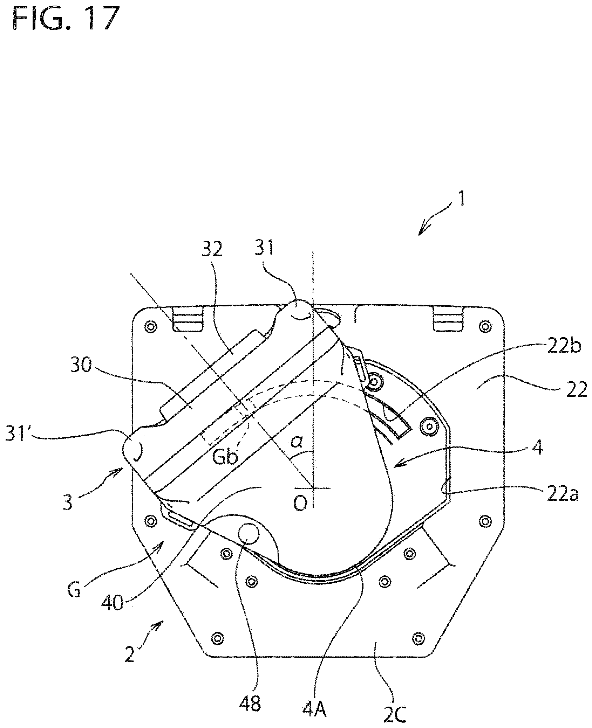

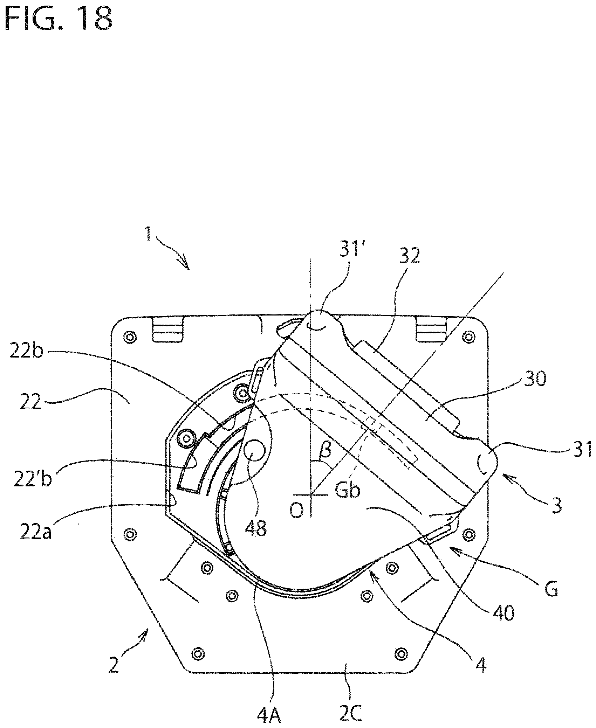

In an example shown in FIGS. 17 and 18, the grip unit G is rotated at an angle of $\alpha$ and $\beta$ respectively around the center O. The angle $\alpha$ is a rotational angle in the counterclockwise direction as viewed from the rear side of the holder body 2 and the angle $\beta$ is a rotational angle in the clockwise direction as viewed from the rear side of the holder body 2. For example, the angles $\alpha$, $\beta$ are set as follows:

$$\alpha = 40 \pm 10 \ [\text{deg.}]$$

$$\beta = 40 \pm 10 \ [\text{deg.}]$$

That is,

$$30° < \alpha < 50°, \ 30° < \beta < 50°$$

Therefore,

$$60° < \alpha + \beta < 100°$$

These are determined considering an individual difference of a body height, an arm length, a gender and the like of the operator.

Here, as a preferred example, the angles $\alpha$ and $\beta$ are set as follows:

$$\alpha = \beta = 40° \ (\text{or} \ \alpha \approx \beta \approx 40°)$$

Thereby, the grip part 3 is allowed for taking at least two orientations, that is, a first orientation that the grip part 3 is rotated at the angle $\alpha$ toward one side across the neutral position and a second orientation that the grip part 3 is rotated at the angle $\beta$ toward the other side across the neutral position. The first orientation and the second orientation intersect diagonally with one another. For example, in the case of $\alpha = \beta = 40°$, an intersecting angle is 100°.

At the rear surface 22 (or the concave portion 22a) of the holder body 2, there is formed an arc-shaped groove 22b around the center O. An opposite surface of the grip unit G disposed opposite the backside surface 22 (or the concave portion 22a) of the holder body 2 is formed with an engagement portion Gb that protrudes and engages with the arc-shaped groove 22b. During rotation of the grip unit G, the grip unit G travels along the arc-shaped groove 22b around the center O of the grip unit G. A setscrew (or a stop pin) 48 is fitted to the support part 4 to fix the grip unit G at a predetermined rotational position. Inaddition, a slightly wider arc-shaped groove 22b' integrally formed with an end of the arc-shaped groove 22b is a groove allowing for an attachment and a detachment of the engagement portion Gb of the grip unit G relative to the arc-shaped groove 22b.

Next, function and effect of the present embodiment will be explained.

When using the above-mentioned tablet holder 1, as shown in FIGS. 1 and 9-11, firstly, the tablet T is placed at the base surface 20 of the holder body 2 and the tablet T is retained at the holder body 2 through the contact part 21 and the respective retaining members 10, 11. From this state, when the operator shifts the tablet T sideways or horizontally, grips the grip part 3 with a left hand and operates the tablet T with a right hand, as shown in FIG. 17, the grip unit G including the grip part 3 is rotated at the angle $\alpha$ in the counterclockwise direction around the center O, as viewed from the backside of the tablet holder 2.

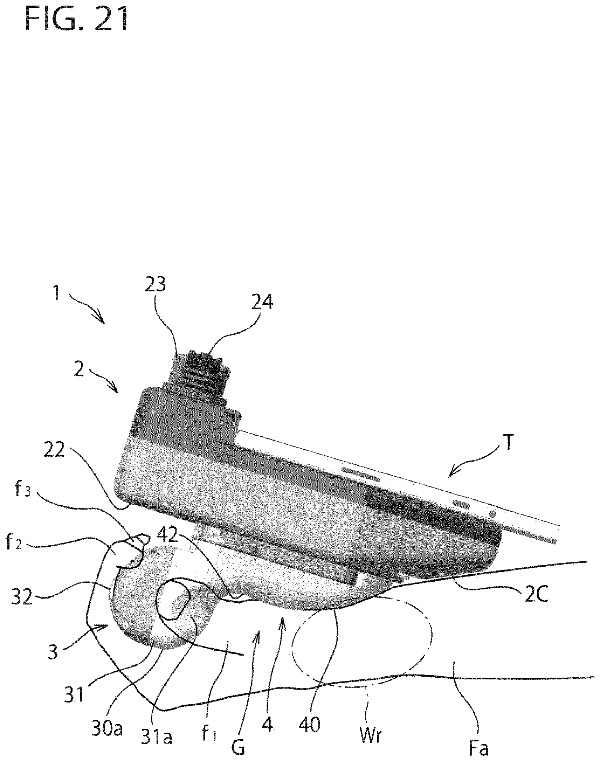

At this juncture, as shown in FIG. 19, the left forearm Fa of the operator P is tilted at the angle $\alpha$ in the clockwise direction from the direction facing directly the front of the body of the operator P, that is, the direction of the neutral position of the grip unit G. The tilted angle α of the forearm Fa is equal to the rotational angle α of the grip unit G. Also, as shown in FIGS. 19 and 21, the grip body part 30 of the grip part 3 is gripped by the second to fifth fingers of the left hand of the operator P and the first finger of the left hand is fitted into the fitting recess 31a of the side portion 31 of the grip body part 30. In addition, FIG. 21 is a left side view illustrating the state in which the operator P grips the grip part 3 with the left hand with the grip unit G disposed at the neutral position (i.e. before rotation at the angle α). However, since the positional relation between the left forearm Fa of the operator P and the grip and support parts 3, 4 is not varied before and after of the rotation of the grip unit G, here, FIG. 21 is used for explanatory convenience.

As shown in FIG. 19 and 21, the wrist Wr of the left hand of the operator P is in contact with the contact surface 40 of the support part 4 of the grip unit G. Here, the wrist Wr, which is disposed at the distal end of the forearm Fa, is a region that includes carpals Ca connected to the respective metacarpal bones Me of the first to fifth fingers of the hand and the respective heads of radius Ra and ulna Ul connected to the carpals Ca. As shown FIGS. 19 and 21, when the operator P grips the grip part3 with a left hand, the wrist Wr contacts the contact surface 40 of the support part 4 from be low and the convexly curved surface of the contact surface 40 is closely attached to an inner surface of the wrist Wr along the curved shape of the wrist Wr. Additionally, in FIG. 21, an example is shown in which the contact surface 40 of the support part 4 is in contact with the wrist Wr of the operator P, and in FIG. 19, an example is shown in which the contact surface 40 of the support part 4 is in contact with a larger area including the wrist Wr of the operator P and its nearby area toward an elbow. However, the contact surface 40 of the support part 4 is preferably in contact with at least the wrist Wr of the operator P. In this description, summing up these parts and areas, it expresses "at least a portion of the forearm Fa of the operator P". Additionally, in FIG. 21, a forearm area further toward the elbow from the wrist Wr is in contact with a tapered surface 2C of the holder body 2.

Then, when the operator shifts the tablet T sideways or horizontally, grips the grip part 3 with a right hand and operates the tablet T with a left hand, as shown in FIG. 18, the grip unit G including the grip part 3 is rotated at the angle β in the clockwise direction around the center O, as viewed from the rear side of the tablet holder 2.

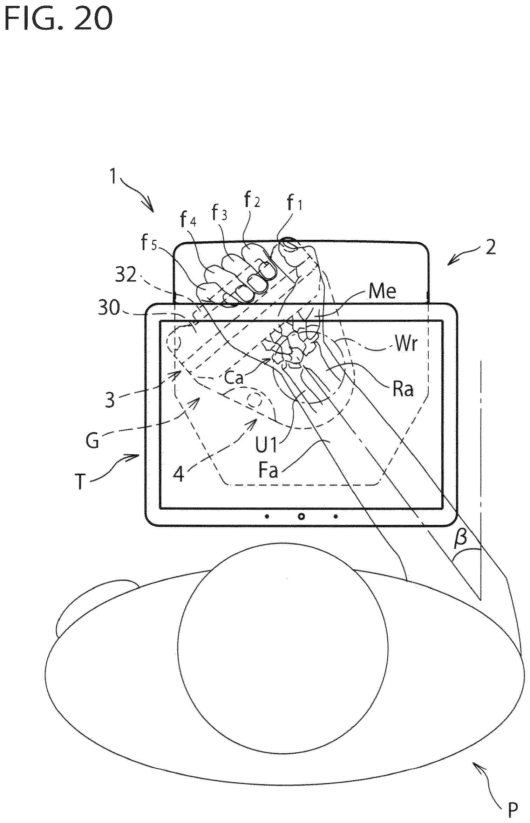

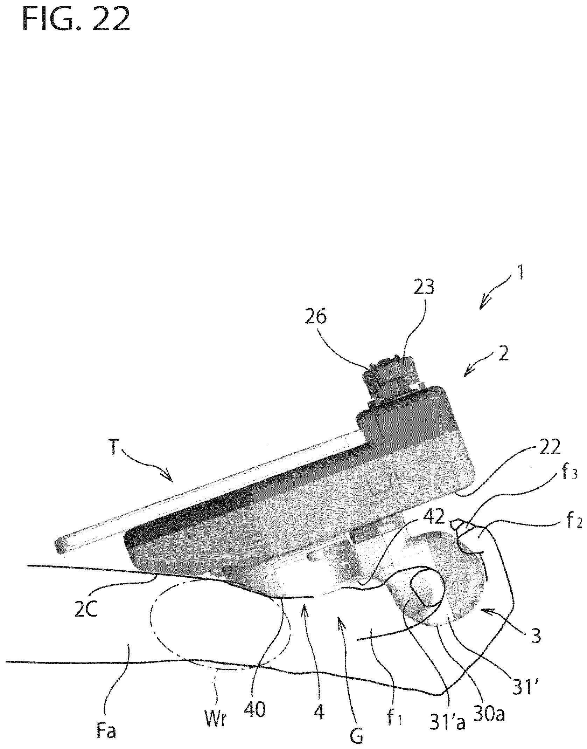

At this juncture, as shown in FIG. 20, a right forearm Fa of the operator P is tilted at the angle β in the counterclockwise direction from the direction facing directly the front of the body of the operator P, that is, the direction of the neutral position of the grip unit G. The tilted angle β of the forearm Fa is equal to the rotational angle β of the grip unit G. Also, as shown in FIGS. 20 and 22, the grip body part 30 of the grip part 3 is gripped by the second to fifth fingers of the right hand of the operator P and the first finger of the right hand is fitted into the fitting recess 31'a of the side portion 31' of the grip body part 30. In addition, FIG. 22 is a right-side view illustrating the state in which the operator P grips the grip part 3 by the right hand with the grip unit G disposed at the neutral position (i.e. before rotationat the angle β) . However, since the positional relation between the right forearm Fa of the operator P and the grip and support parts 3, 4 is not varied before and after the rotation of the grip unit G, here, FIG. 22 is used for explanatory convenience.

The wrist Wr of the right hand of the operator P is in contact with the contact surface 40 of the support part 4 of the grip unit G. As set forth above, the wrist Wr, which is disposed at the distal end of the forearm Fa, is a region that includes carpals Ca and the respective heads of radius Ra and ulna Ul. As shown in FIGS. 20 and 22, when the operator P grips the grip part 3 with a right hand, the wrist Wr comes into contact with the contact surface 40 of the support part 4 from below, and the convexly curved surface of the contact surface 40 is closely attached to the inner surface of the wrist Wr along the curved shape of the wrist Wr. In FIG. 22, an example is shown in which the contact surface 40 of the support part 4 is in contact with the wrist Wr of the operator P, and in FIG. 20, an example is shown in which the contact surface 40 of the support part 4 is in contact with a larger area including the wrist Wr of the operator P and its nearby area toward an elbow. However, the contact surface 40 of the support part 4 is preferably in contact with at least the wrist Wr of the operator P and also preferably in contact with at least a portion of the forearm Fa of the operator P. Additionally, in FIG. 22, a forearm area further toward the elbow from the wrist Wr is in contact with a tapered surface 2C of the holder body 2.

On the other hand, when the operator P shifts the tablet T vertically, grips the grip part 3 with a right hand and operates the tablet T with a left hand, as shown in FIGS. 17 and 19, the grip unit G is rotated at the angle α in the counterclockwise direction around the center O, as viewed from the rear side of the tablet holder 2, and then the operator just has to grip the grip part 3 with the right hand. At this time, the grip body part 30 of the grip part 3 is gripped by the second to fifth fingers of the right hand of the operator P and the first finger of the right hand is fitted into the fitting recess 31'a of the side portion 31' of the grip body part 30.

At this juncture, this is not illustrated, but the forearm Fa of the right hand of the operator P is tilted at the angle α in the clockwise direction from the direction of the neutral position of the grip unit G. In other words, the forearm Fa of the right hand is tilted at the angle (90°-α) in the counterclockwise direction from the direction facing directly the front of the body of the operator P. In this case as well, the wrist Wr of the right hand of the operator P contacts the contact surface 40 of the support part 4 of the grip unit G from below, and the convexly curved surface of the contact surface 40 is closely attached to the inner surface of the wrist Wr along the curved surface of the wrist Wr.

Also, when the operator P shifts the tablet T vertically, grips the grip part 3 with a left hand and operates the tablet T with a right hand, as shown in FIGS. 18 and 20, the grip unit G is rotated at the angle β in the clockwise direction around the center O, as viewed from the rear side of the tablet holder 2, and then the operator just has to grip the grip part 3 with the left hand. At this time, the grip body part 30 of the grip part 3 is gripped by the second to fifth fingers of the left hand of the operator P and the first finger of the left hand is fitted into the fitting recess 31a of the side portion 31 of the grip body part 30.

At this juncture, this is not illustrated, but the forearm Fa of the left hand of the operator P is tilted at the angle β in the counterclockwise direction from the direction of the neutral position of the grip unit G. In other words, the forearm Fa of the left hand is tilted at the angle (90°-β) in the clockwise direction from the direction facing directly the front of the body of the operator P. In this case as well, the wrist Wr of the left hand of the operator P contacts the contact surface 40 of the support part 4 of the grip unit G from below, and the convexly curved surface of the contact surface 40 is closely attached to the inner surface of the wrist Wr along the curved surface of the wrist Wr.

In this way, according to the present embodiment, since the support part 4 in addition to the grip part 3 is provided on the rear side of the holder body 2, when the operator P places the tablet T on the base surface 20 on the front side of the holder body 2 and grips the grip part 3 with a hand, the entire weight of the tablet holder 2 can be supported not only by the hand of the operator P through the grip part 3 but also by at least a portion of the forearm Fa of the operator P through the support part 4. A load can thus be dispersed on the hand and the forearm Fa of the operator P and a moment of force acting to the forearm Fa can be decreased, such that thereby the burden on the body of the operator P during operation can be further relieved. Especially when the tablet T becomes large or during a prolonged use of the tablet T, the burden to the arm of the operator P can be alleviated. In this embodiment, as shown in FIGS. 21 and 22, the tapered surface 2C disposed at the lower portion of the holder body 2 functions as a support portion as well and a forearm site that contacts the tapered surface 2C supports a part of the weight of the entire tablet holder 2. Thereby, the load can be further dispersed and the moment of force acting to the forearm Fa can be further lessened. By so doing, the burden on the body of the operator P during operation can be furthermore alleviated.

Moreover, according to the present embodiment, since the grip part 3 is adapted to take at least two orientations on the rear side of the holder body 2, the operator P can support the tablet T stably in either orientation of a horizontal orientation or a vertical orientation and grip the grip part 3 with either hand of a left hand or a right hand, which can also alleviate the burden on the body of the operator P.

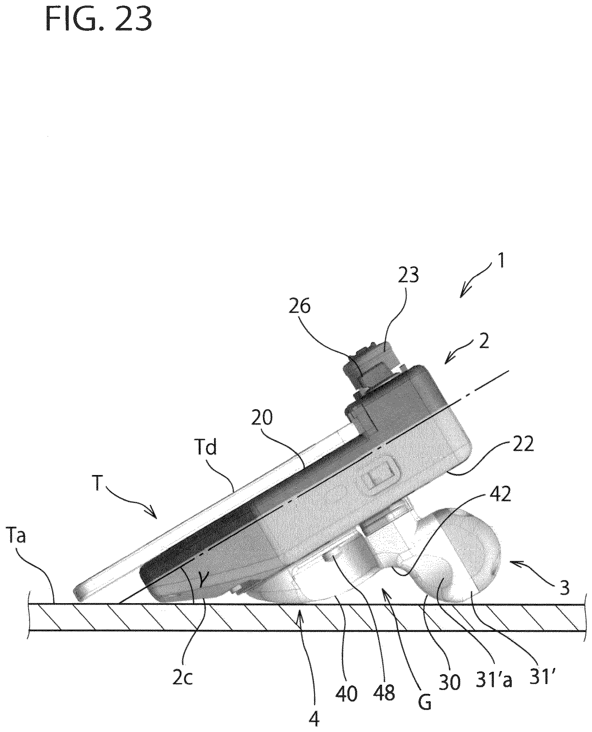

The tablet holder 1 according to the present embodiment may be placed and used on a horizontal surface of a table or the like. FIG. 23 shows the state in which the tablet holder 1 is placed on a table surface Ta. At this time, the grip part 3 and the support part 4 on the rear side of the holder body 2 are in contact with the table surface Ta and the base surface 20 of the holder body 2 is tilted at an angle γ (e.g. 30 degrees) relative to the table surface Ta. Thereby, a screen Td of the tablet T can be disposed at an easily viewable angle for the operator P.

As shown in FIGS. 2 and 10, at the upper portion of the holder body 2, there are provided an emergency stop switch 23, a joystick 24, and other switches 25, 26 as an operation input part that receives various input operations by the operator. By fitting these switches to the holder body 2, an operational function for the tablet T can be added, and a setting change of the tablet T and an input operation such as an operation of an external instrument can be performed through these switches as well, thereby improving operability.

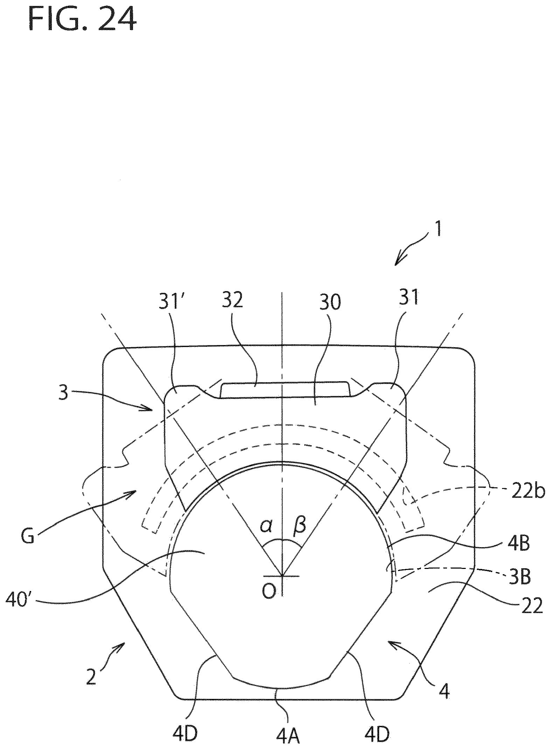

In the above-stated example, the grip unit G is structured such that the grip part 3 and the support part 4 are integrated with one another and the grip unit G is rotatable around the center O, but the application of the present invention is not limited to such an example. FIG. 24 shows an example in which the grip part 3 and the support part 4 composing the grip unit G are formed separately. In the drawing, like reference numbers indicate identical or functionally similar elements to those in FIGS. 17 and 18.

As shown in FIG. 24, the support part 4 has a convexly circular arc-shaped surface 4B at the top thereof with its center located at the center O. A pair of linear side surfaces 4D connect between opposite ends of an upper circular arc-shaped surface 4B and opposite ends of a lower circular arc-shaped surface 4A. The support part 4 is fixed to the holder body 2. A contact surface 40' of the support part 4 includes an extension area of the contact surface 40 of the support part 4 after rotation as respectively shown in FIGS. 17 and 18. That is, the contact surface 40' of the support part 4 in FIG. 24 includes a track of the contact surface 40 when the contact surface 40 of the support part 4 is transferred from a rotational position shown in FIG. 17 to a rotational position shown in FIG. 18. The contact surface 40' is thus formed of a convexly curved surface. The convexly curved surface protrudes the most and has a maximum height at and around the center O of the holder body 2, and its height is gradually lowered toward the lower circular arc-shaped surface 4A of the support part 4. Also, the upper circular arc-shaped surface 4B of the support surface 4 is preferably formed with a concavely curved surface that curves concavely into the page of FIG. 24 to smoothly connect the grip part 3 and the upper circular arc-shaped surface 4B (see the concavely curved surface 42 of the first embodiment).

Also, as shown in FIG. 24, the grip part 3 has a concavely circular arc-shaped surface 3B at the lower portion thereof with a center located at the center O. The circular arc-shaped surface 3B is disposed opposite the circular arc-shaped surface 4B of the support part 4 via a predetermined clearance. The grip part 3, similar to the grip part 3 in FIGS. 17 and 18, is rotatable around the center O along a circular arc-shaped groove 22b. The grip part 3 is adapted to take a first orientation in which it rotates at the angle α toward one side across the neutral position and a second orientation in which it rotates at the angle β toward the other side across the neutral position, accordingly, at least two orientations. During rotation of the grip part 3, the circular arc-shaped surface 3B of the grip part 3 slides along the circular arc-shaped surface 4B of the support part 4.

In this case, when the grip part 3 rotates in either direction of the angle α or β, the wrist of the operator contacts the contact surface 40' of the support part 4 from below and the convexly curved surface of the contact surface 40' is closely attached to the wrist. Thereby, the burden on the body of the operator during operation can be further relieved and the burden on the arm of the operator can be alleviated.

<Second Embodiment>

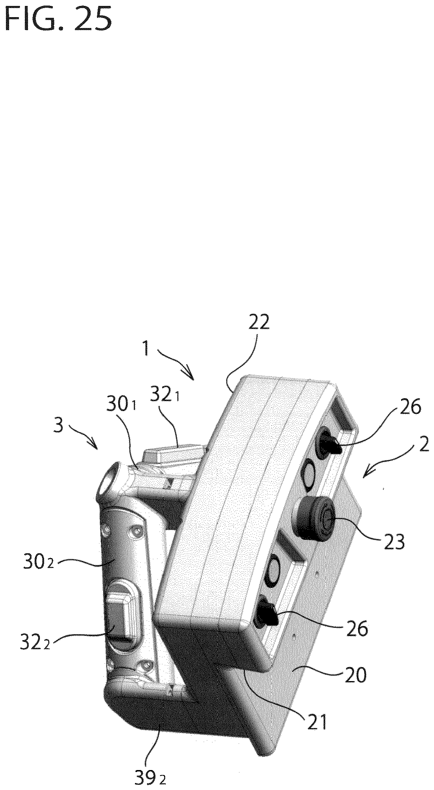

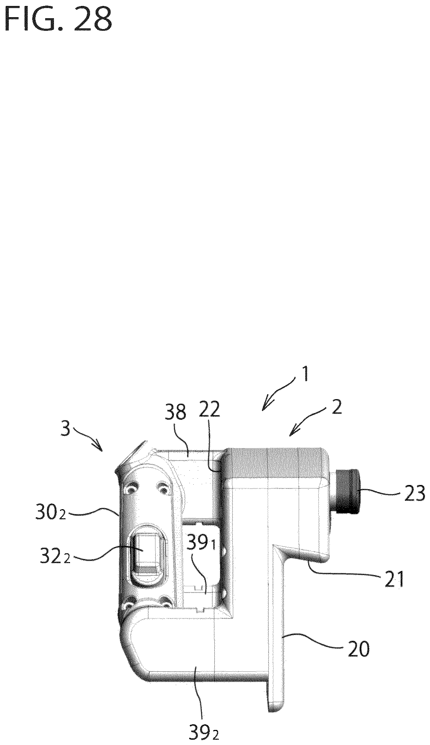

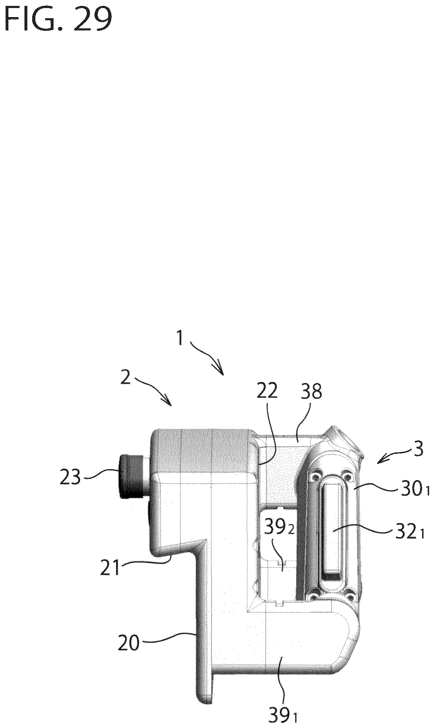

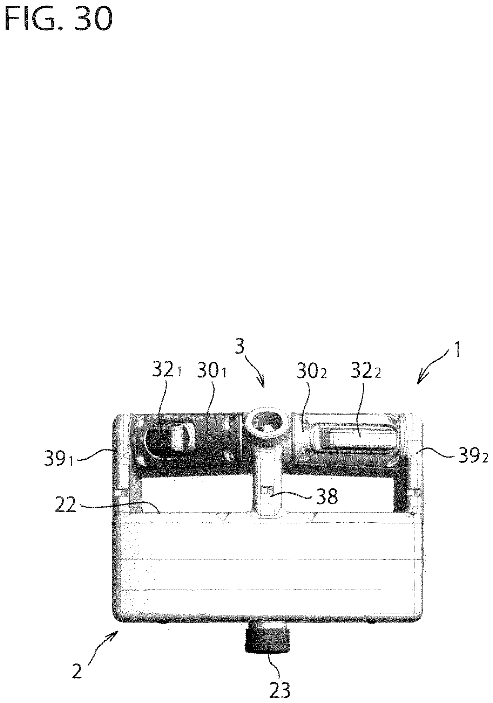

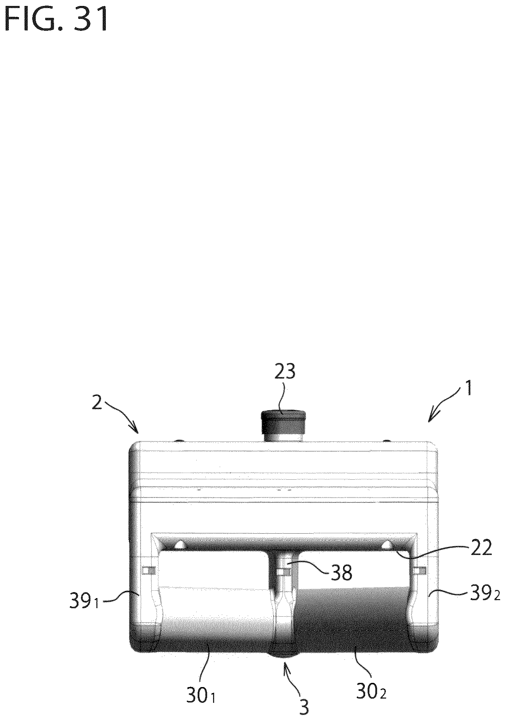

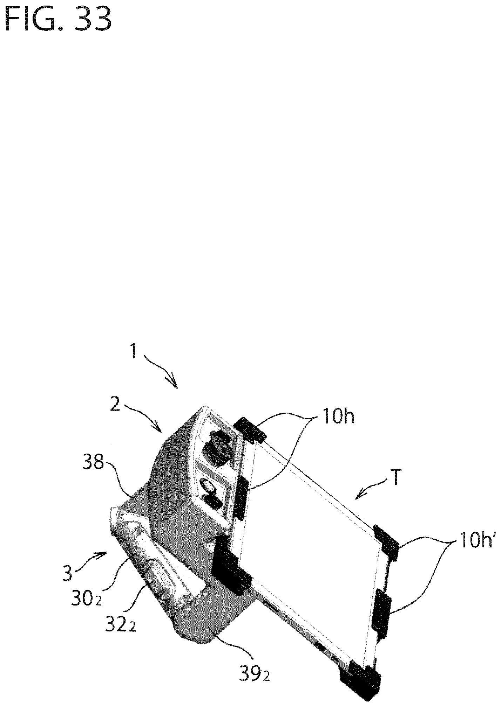

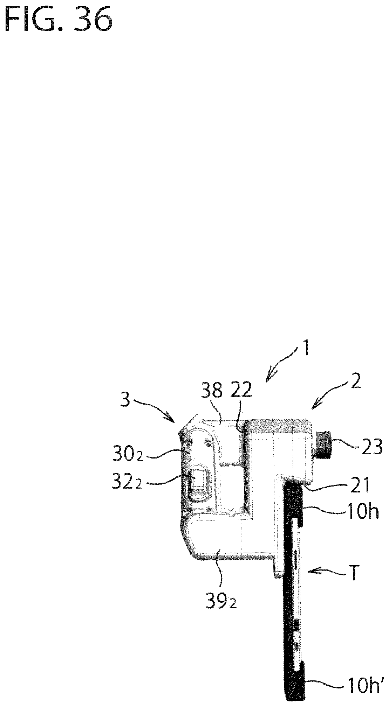

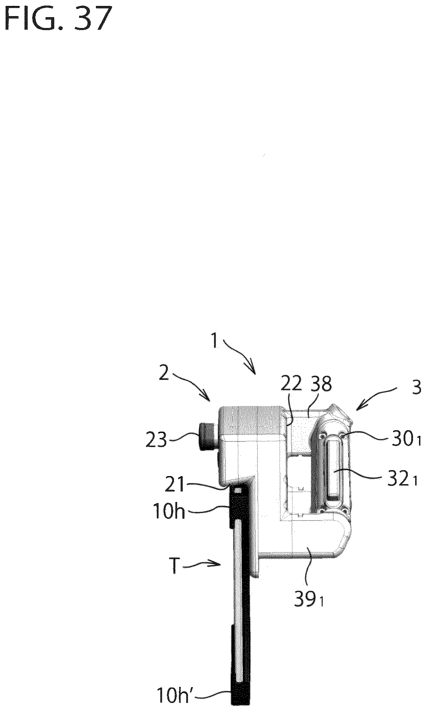

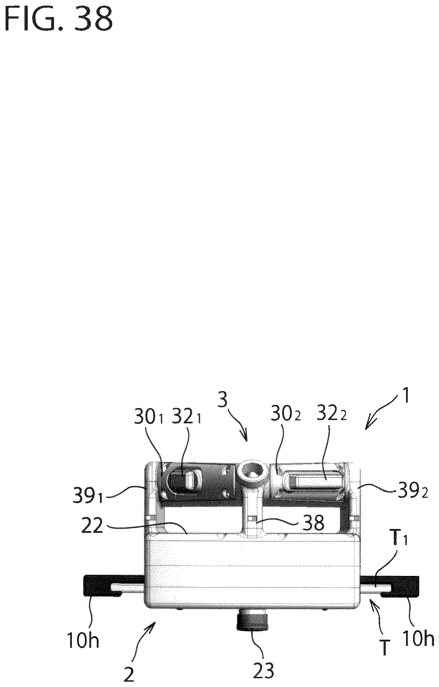

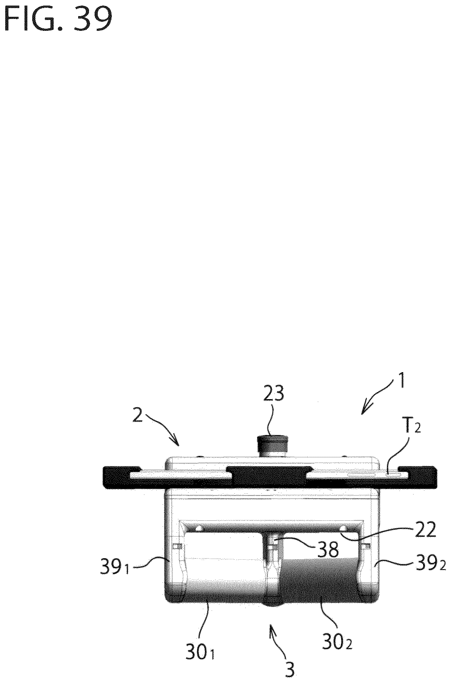

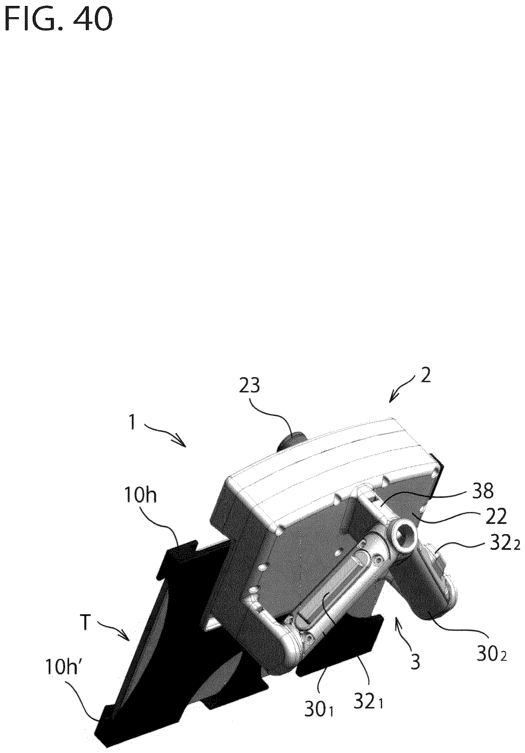

In the aforementioned first embodiment, an example was shown in which the grip part 3 is configured rotatable, but the application of the present invention is not limited to such an embodiment. FIGS. 25-40 are drawings for explaining a tablet holder according to a second embodiment of the present invention. In these drawings, like reference numbers indicate identical or functionally similar elements to those in the first embodiment. FIGS. 25-32 are external views of the tablet holder alone, and FIGS. 33-40 are external views of the state in which the tablet is held by the tablet holder.

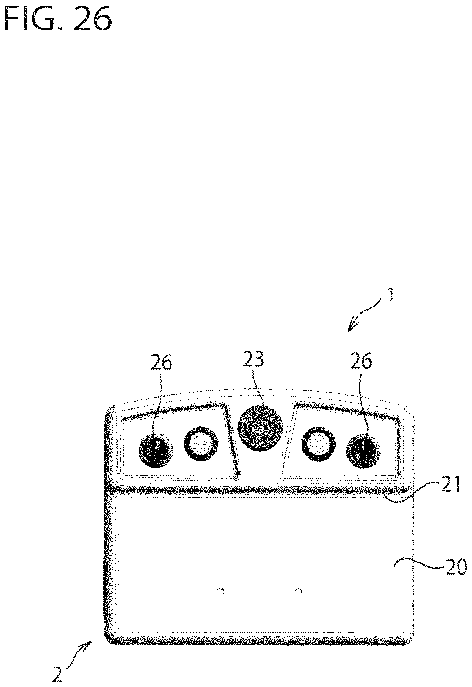

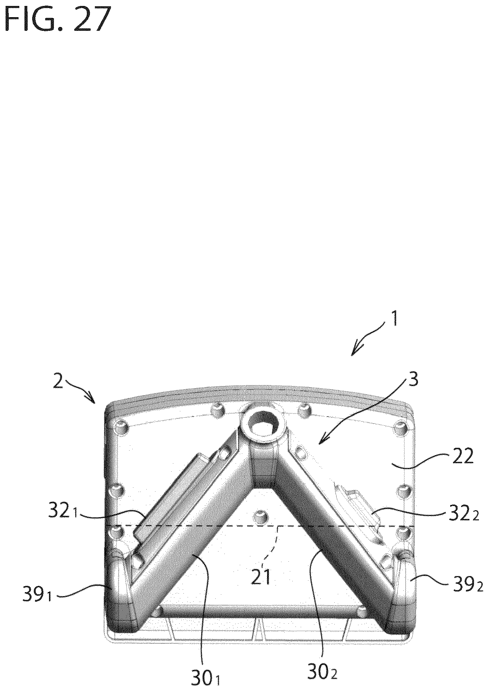

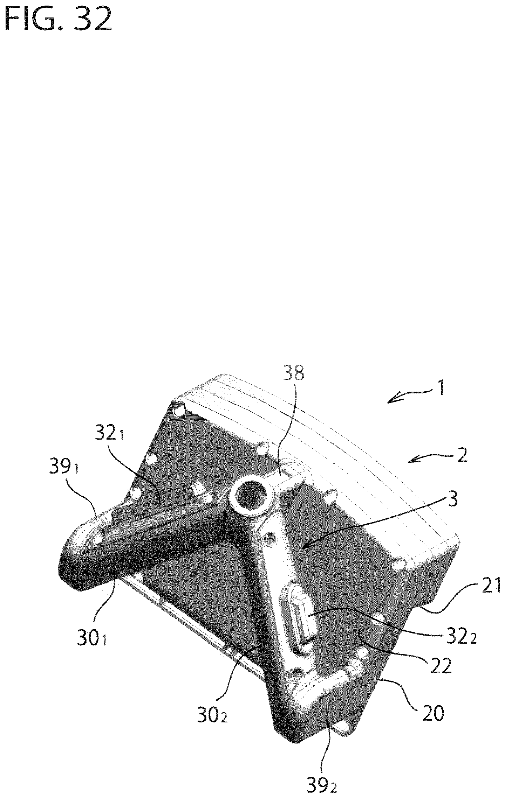

The second embodiment differs from the first embodiment in that the grip part 3 is fixed to the holder body 2. As shown in FIGS. 27 and 32, the grip part 3 is formed of a first grip part $30_1$ and a second grip part $30_2$ that intersect with one another in an inverted V-shape on the rear side of the holder body 2. The first and second grip parts $30_1$, $30_2$ form a predetermined clearance relative to the rear surface 22 of the holder body 2. The arrangement direction of the first and second grip parts $30_1$, $30_2$ extends in a direction crossing the arrangement direction of the contact part 21 (see FIGS. 26, 28 and 29) that one side surface of the tablet T contacts on the front side of the holder body 2. The first and second grip parts $30_1$, $30_2$ intersect diagonally with one another.

The respective upper ends of the first and second grip parts $30_1$, $30_2$ are interconnected with one another and fixed to the rear surface 22 of the holder body 2 through a connecting part 38 extending toward the rear surface 22 of the holder body 2. The lower end of the first grip part $30_1$ is fixed to the rear surface 22 of the holder body 2 through a connecting part $39_1$ extending toward the rear surface 22 of the holder body 2. Likewise, the lower end of the second grip part $30_2$ is fixed to the rear surface 22 of the holder body 2 through a connecting part $39_2$ extending toward the rear surface 22 of the holder body 2. Also, the first grip part $30_1$ has an enable switch $32_1$ fitted thereto and the second grip part $30_2$ has an enable switch $32_2$ fitted thereto.

When the operator shifts the tablet T sideways or horizontally to operate it, the operator just has to grip the grip part $30_1$ with a left hand, or grips the grip part $30_2$ with a right hand. On the other hand, when the operator shifts the tablet T vertically to operate it, the operator just has to grip the grip part $30_2$ with a left hand, or grips the grip part $30_1$ with a right hand.

In either case, when the operator grips the grip parts $30_1$, $30_2$, the rear surface 22 of the holder body 2 is supported by the wrist or at least a portion of the forearm of the operator. Thereby, the burden on the body of the operator during operation can be further relieved and the burden on the arm of the operator can be alleviated. Additionally, in this example, the rear surface 22 of the holder body 2 is formed of a generally planar surface, but a support part may be provided that has a convexly curved surface to fit the curved shape of at least the wrist of the operator. Thereby, a support property of the wrist can be improved to further alleviate the burden on the arm of the operator.

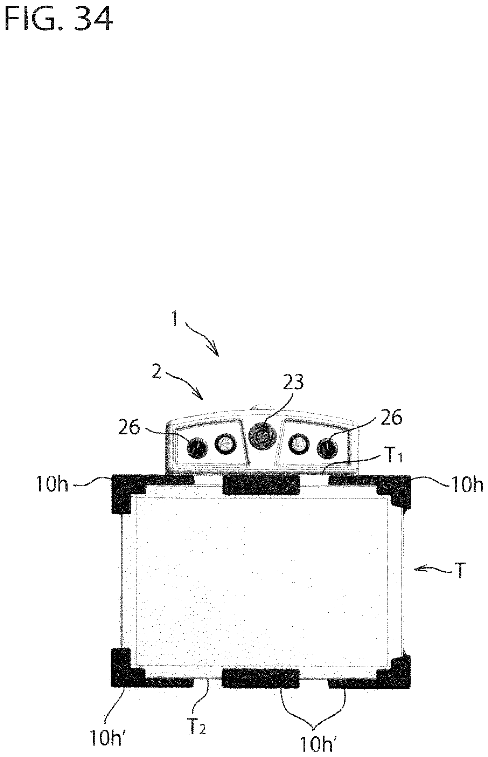

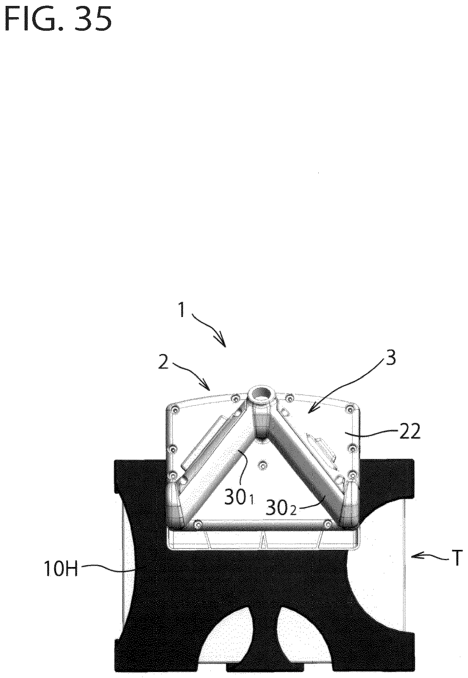

In the above-mentioned first embodiment, an example was shown in which the retaining members 10, 11 for the tablet T retain only the lower side surface $T_2$ of the tablet T. However, in this second embodiment, as shown in FIG. 34, in addition to a retaining member 10h' for retaining the lower side surface $T_2$ of the tablet T, a retaining member 10h for retaining the upper side surface $T_1$ of the tablet T is provided. The respective retaining members 10h, 10h' are also provided at a central portion of the side surface of the tablet T as well as the corner portions of the tablet T. Also, the respective retaining members 10h, 10h', as shown in FIG. 35, is formed integrally with one another through a planar section 10H that covers a large part of the rear surface 22 on the rear side of the holder body 2.

<Third Embodiment>

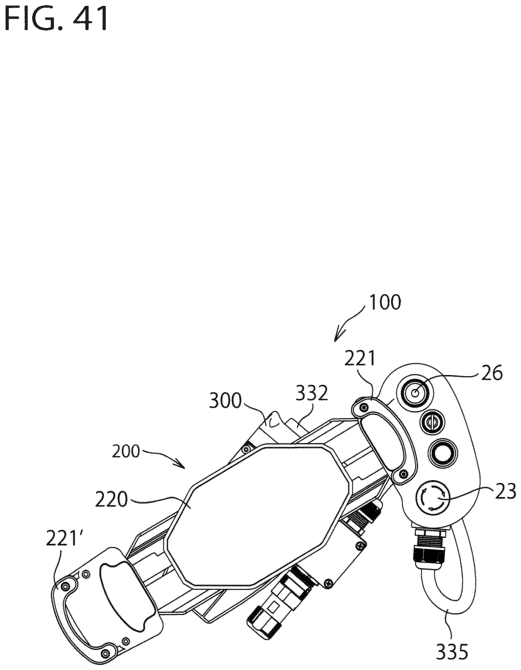

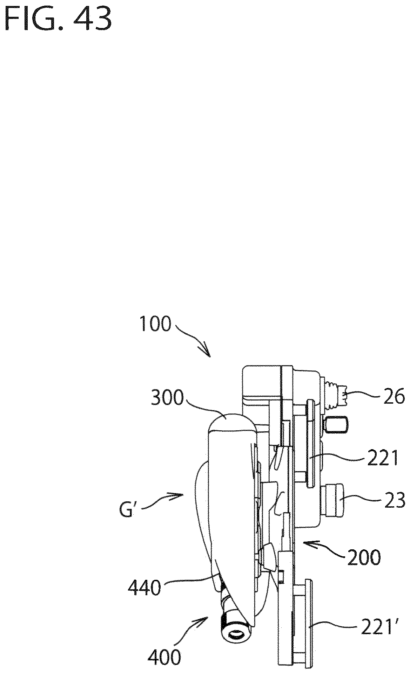

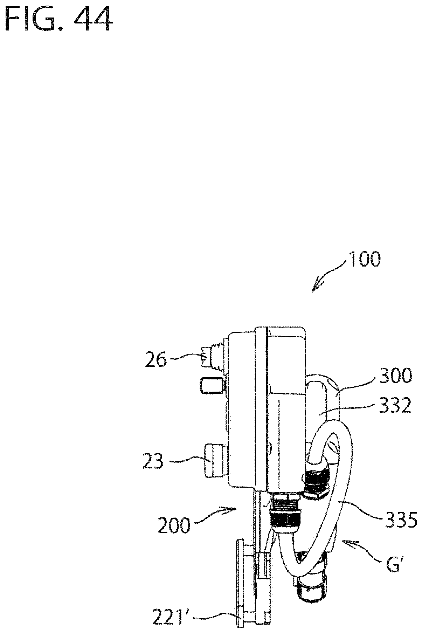

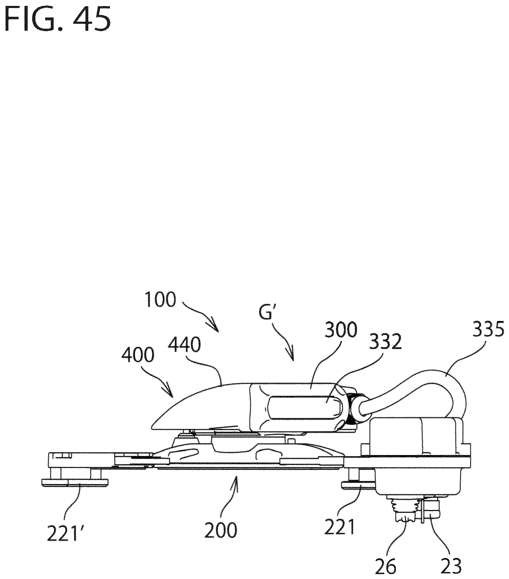

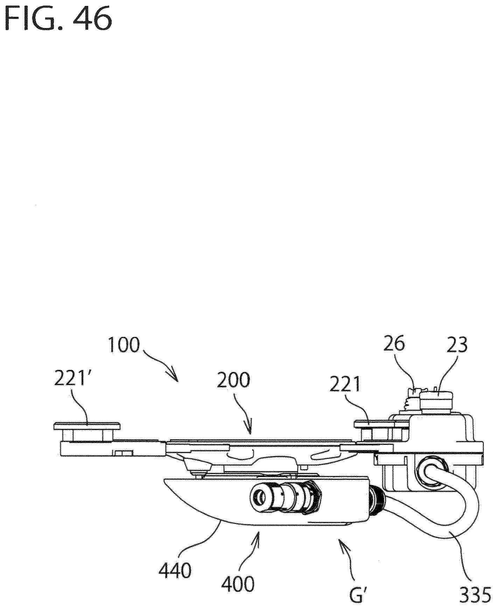

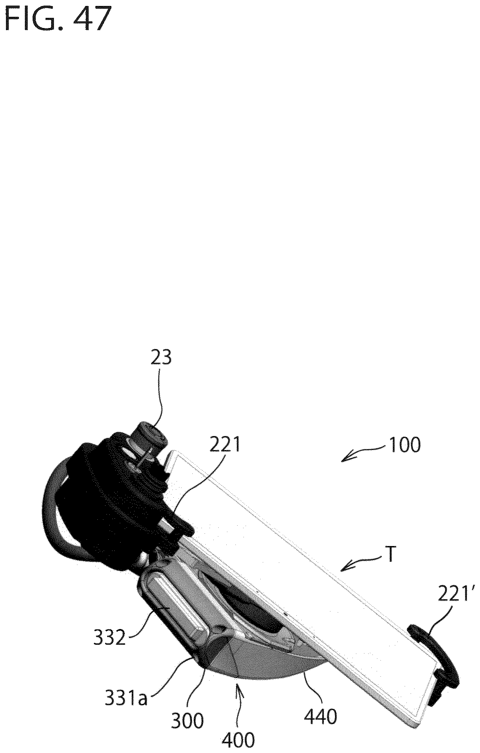

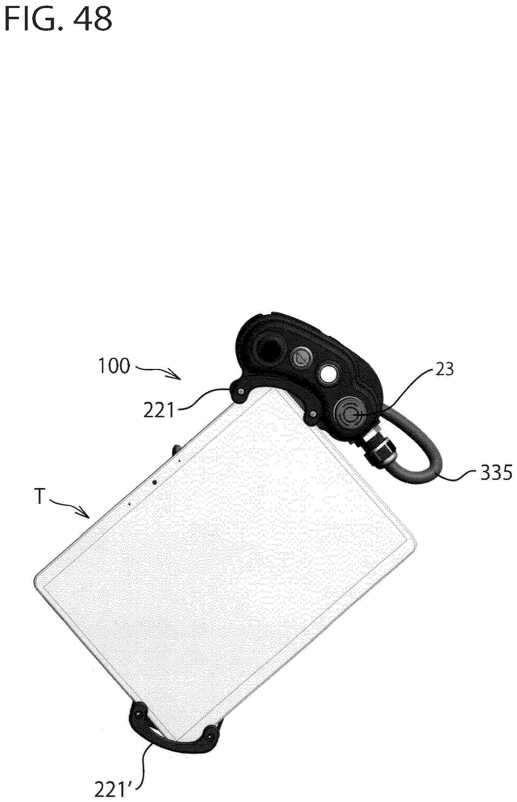

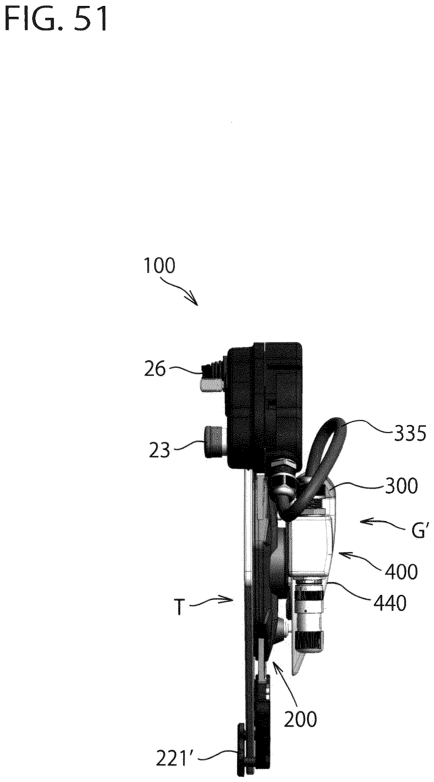

FIGS. 41-52 show a tablet holder according to a third embodiment of the present invention. In these drawings, like reference numbers indicate identical or functionally similar elements to those in the first embodiment. FIGS. 41-46 show a tablet holder alone and FIGS. 47-52 show the state in which a tablet is held by the tablet holder.

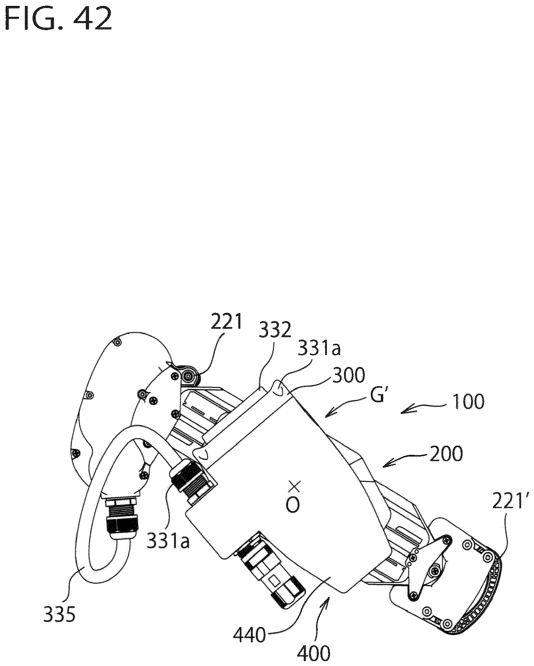

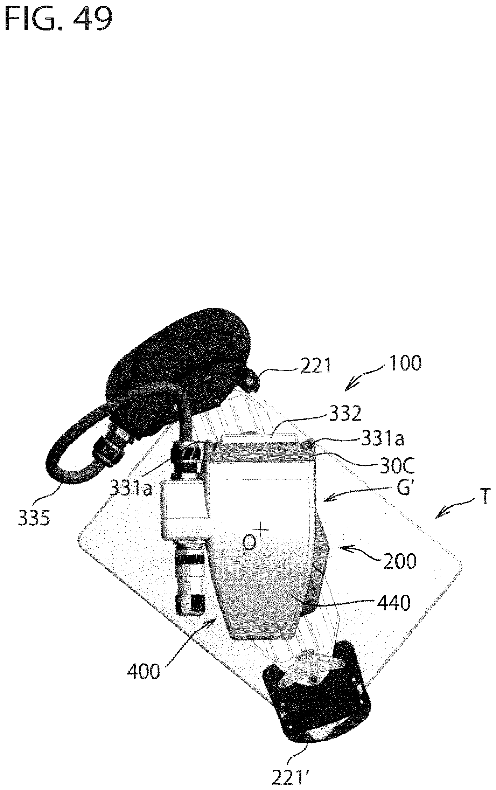

As shown in FIGS. 41, 42, 48 and 49, a tablet holder 100 includes a holder body (or device body) 200 having a base surface 220 on the front side thereof that a tablet T is placed at, a grip part 300 disposed on the rear side of the holder body 200 for an operator to grip with hand, and a support part 400 that is disposed on the rear side of the holder body 200 and that is supported from below by at least a portion of a forearm of the operator when the operator grips the grip part 300 with hand. Here, the support part 400 is formed integrally with the grip part 300 and constitutes a grip unit G' as a whole. The grip unit G' is rotatable around the center O (FIGS. 42, 49) of the holder body 200 in the clockwise and counterclockwise directions, thereby enabling to take at least two orientations.

The holder body 200, as shown in FIGS. 41, 42, and 46-49, has a pair of slidable retaining members 221, 221' for sandwiching and retaining the tablet T therebetween from its diagonal direction. The respective retaining members 221, 221' are provided movably toward and away from one another thus allowing for an easy correspondence to the tablet T of various sizes.

The grip part 300, as shown in FIGS. 42, 43, 49 and 50, is a part to be gripped with mainly a second to fifth finger of the hand of the operator and has an outer circumferential surface of a generally convexly circular arc-shape (or a round-shape) as viewed from side. A fitting recess 331a formed on opposite sides of the grip part 300 corresponds to a first finger of the hand of the operator. At the top portion of the grip part 300, an enable switch 332 is provided.

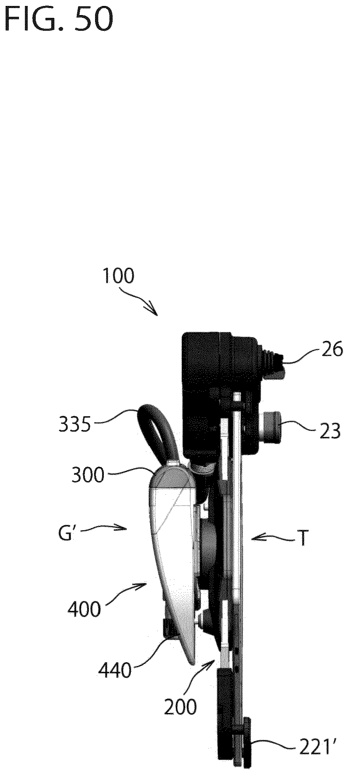

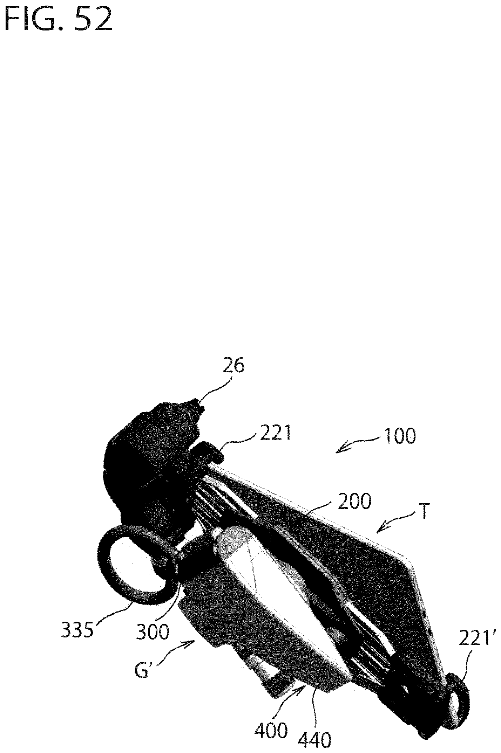

The support part 400, as shown in FIGS. 42, 49, 50 and 52, which is integrally formed with the grip part 300, extends in a direction orthogonal to the grip part 300. The support part 400 has a contact surface 440 that at least a portion of a forearm of the operator contacts when he/she grips the grip part 300 with a hand. The contact surface 440 is formed of a convexly curved surface as shown in FIGS. 50 and 52. The convexly curved surface protrudes the most and has a maximum height at the top portion of the support part 400. The height of the convexly curved surface is gradually lowered toward the distal end (or the lower end) of the support part 400. In the drawings, reference number 335 is a cable that extends between the emergency stop switch 23 and the support part 400 and that is connected to an eternal instrument.

When using the above-mentioned tablet holder 100, as shown in FIGS. 41, 47-50, firstly, the tablet T is placed on the base surface 220 of the holder body 200 and the tablet T is sandwiched and retained between the respective retaining members 221, 221' from the diagonal direction. From this state, according to an orientation (i.e. horizontal orientation/vertical orientation) of the tablet T in operating the tablet T by the operator and an operation by either hand of a right hand or a left hand, the operator rotates the grip unit G' including the grip part 300 at a predetermined amount around the center O in a counterclockwise direction or a clockwise direction.

At this time, this is not illustrated, but the second to fifth fingers of the hand of the operator grip the grip part 300 and the first finger is fitted into the fitting recess 331a of the grip part 300. Also, at this time, at least a portion of the forearm of the operator, that is, the wrist and a forearm site toward the elbow contacts the contact surface 440 of the support part 40 of the grip unit G' from below and the convexly curved surface of the contact surface 440 is in close contact with the inner surface of the wrist of the operator along the curved surface of the wrist.

In this third embodiment as well, since the support part 400 in addition to the grip part 300 is provided on the rear side of the holder body 200, when the operator places the tablet T on the base surface 200 on the front side of the holder body 200 and grips the grip part 300 with a hand, the entire weight of the tablet holder 100 can be supported not only by the hand of the operator through the grip part 300 but also by at least a portion of the forearm of the operator through the support part 400. A load can thus be dispersed on the hand and the forearm of the operator and a moment of force acting to the forearm can be decreased, such that thereby the burden on the body of the operator during operation can be further relieved. Especially when the tablet T becomes large or during a prolonged use of the tablet T, the burden to the arm of the operator can be alleviated. Moreover, since the grip part 300 is adapted to take at least two orientations on the rear side of the holder body 200, the operator can support the tablet T stably in either orientation of a horizontal orientation or a vertical orientation and grip the grip part 300 with either hand of a left hand or a right hand, which can also alleviate the burden on the body of the operator.

More preferably, a concavely curved surface may be formed at a portion of the contact surface 400 of the support part 400 of the grip unit G'. If the contact surface 440 is formed of only the convexly curved surface, it is expected that a support becomes unstable due to the wight of the tablet T in addition to the holder body 200 when holding the tablet holder 100 with a forearm of the operator. However, forming a concavely curved surface at a portion of the contact surface 440 makes the contact surface 440 easy to closely contact the forearm of the operator, thereby allowing for a more stable hold of the tablet holder 100.

<Fourth Embodiment>

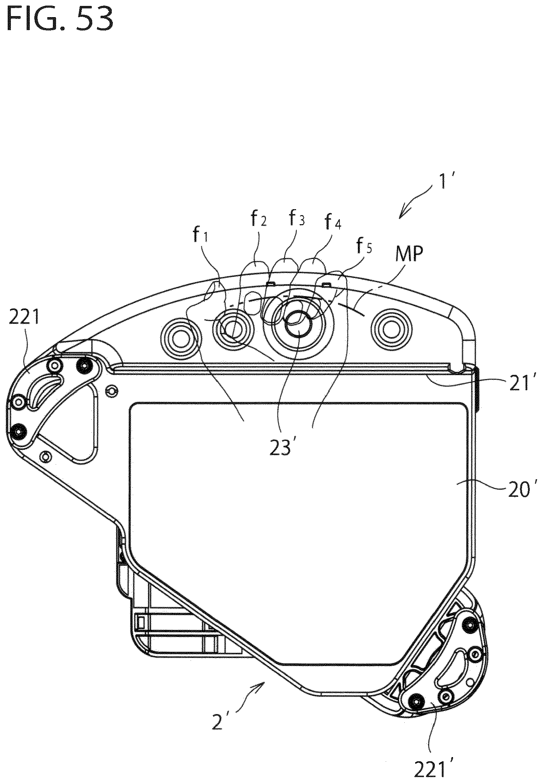

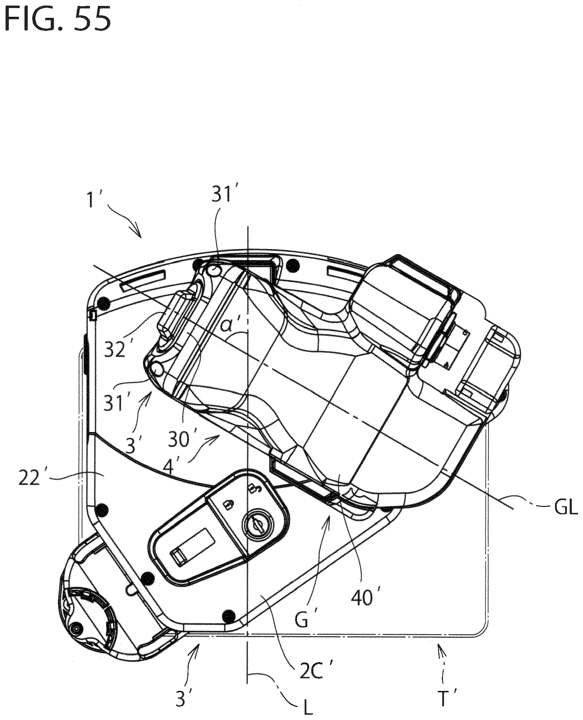

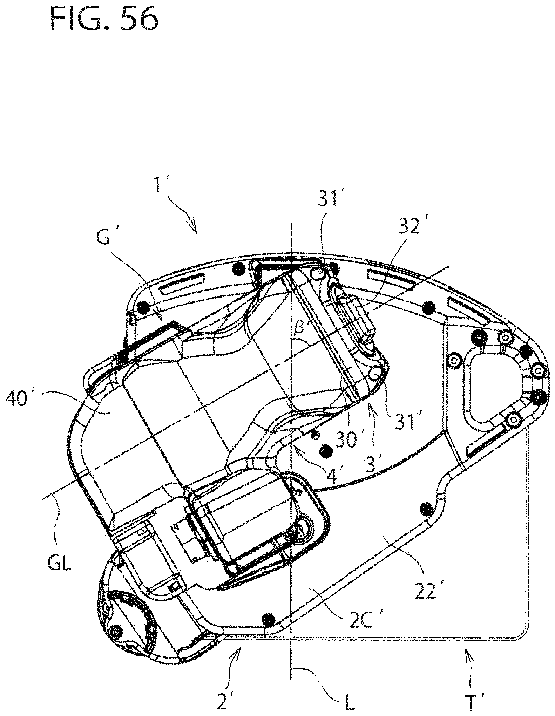

FIGS. 53-60 show a tablet holder according to a fourth embodiment of the present invention. FIGS. 53, 54, and 57-60 are external views of the tablet holder alone. FIGS. 55 and 56 are rear elevational view (or backside view) in which a tablet (shown by a dash-and-dot-line) is held by the tablet holder. In these drawings, reference numbers like those in the first embodiment indicate identical or functionally similar elements.

In this embodiment, as a tablet T' to be detachably held by the tablet holder 1', a comparatively large-sized tablet (e.g. a size of a diagonal length of approximately 10-13 inches) is expected.

As shown in FIGS. 53-56, the tablet holder 1' includes a holder body (or device body) 2' having abase surface 20' on the front side thereof for the tablet T' to be placed, a grip part 3' disposed on the rear side of the holder body 2' for the operator to grip, and a support part 4' that is disposed on the rear side of the holder body 2' and that is supported from below by at least a potion of the forearm of the operator when the operator grips the grip part 3' with a hand. Here, the support part 4' is integral with the grip part 3' to constitute a grip unit G' as a whole.

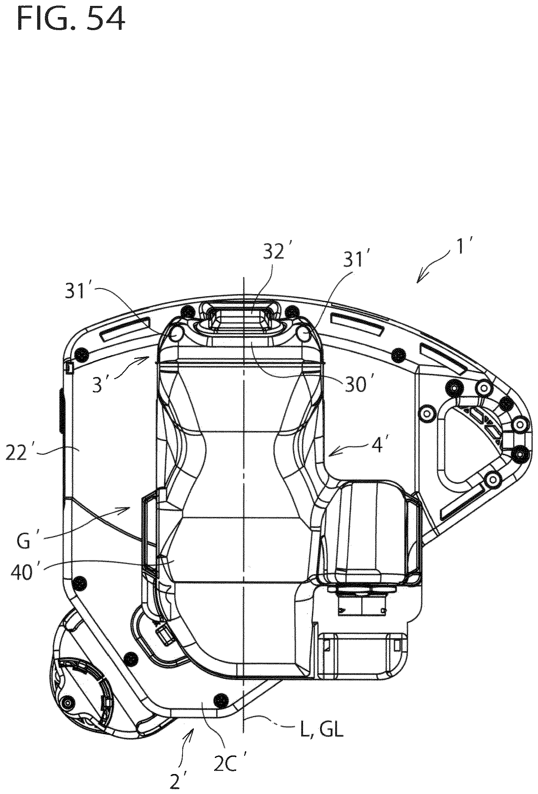

The grip unit G' is rotatable on the base surface 22' of the holder body 2', such that thereby relative to a longitudinal centerline L of the holder body 2', the grip unit G' take a first rotational position as shown in FIG. 55 in which it rotates an angle of up to α' in the counterclockwise direction as viewed from the rear side, a second rotational position as shown in FIG. 56 in which it rotates an angle of up to β' in the clockwise direction as viewed from the rear side, and an intermediate position between the first rotational position and the second rotational position, that is, the intermediate position between the neutral position of FIG. 54 and the first rotational position of FIG. 55, and the intermediate position between the neutral position of FIG. 54 and the second rotational position of FIG. 56. Therefore, the grip unit G' is adapted to take at least two orientations (FIGS. 55, 56) in which the longitudinal centerline GL is rotated to right and left across the neutral position (FIG. 54), at which the longitudinal centerline GL coincides with the longitudinal centerline L of the holder body 2'.

Here, for example, the angles α', β' are set as follows:

$$\alpha'=\beta'=60 \ [\text{deg.}] \quad \text{or} \quad \alpha'\approx\beta'\approx60 \ [\text{deg.}]$$

That is, the angles α', β' are set at 60 degrees, or approximately (or generally) 60 degrees.

This is because that in the above-stated comparatively large-sized tablet of about 10 to 13 inches, an angle between a short side (or a side in the transverse direction) of the tablet and a diagonal line is about 60 degrees.

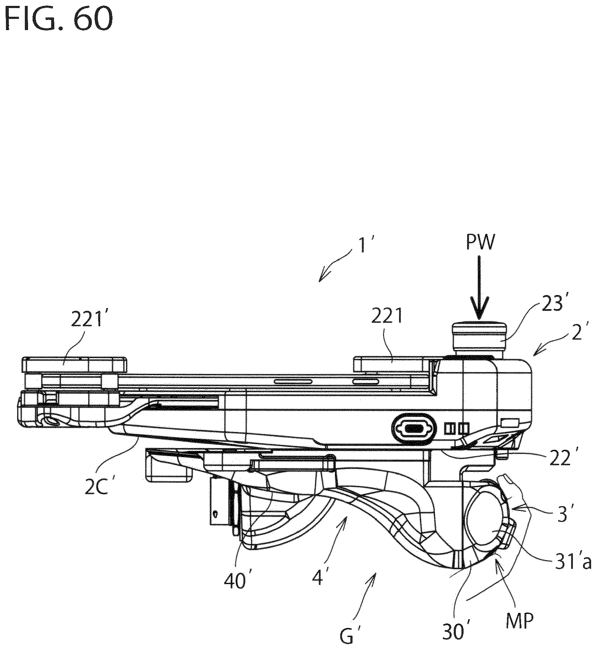

The tablet holder 1', as shown in FIGS. 53 and 60, has a pair of retaining members 221, 221' for sandwiching and retaining the tablet T' in the diagonal direction. Preferably, at least either one of the retaining members 221, 221', for example, the retaining member 221' is provided slidably movably toward and away from the retaining member 221. The functions of the retaining members 221, 221' are similar to those of the retaining members 221, 221' of the tablet holder in the aforesaid third embodiment.

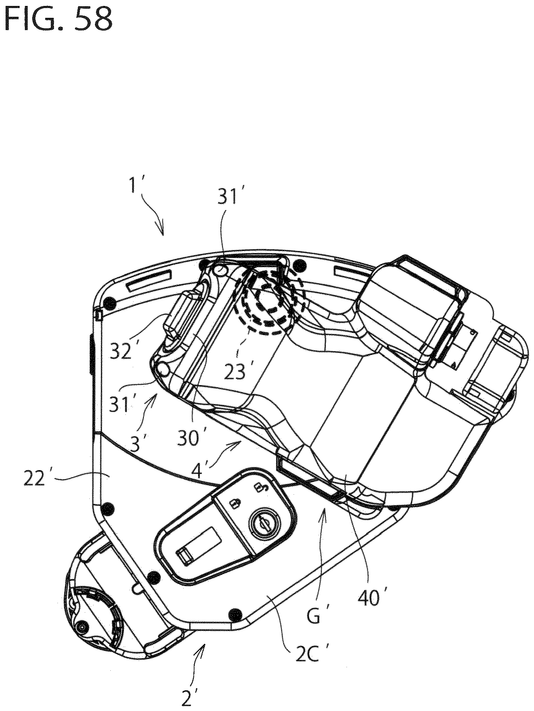

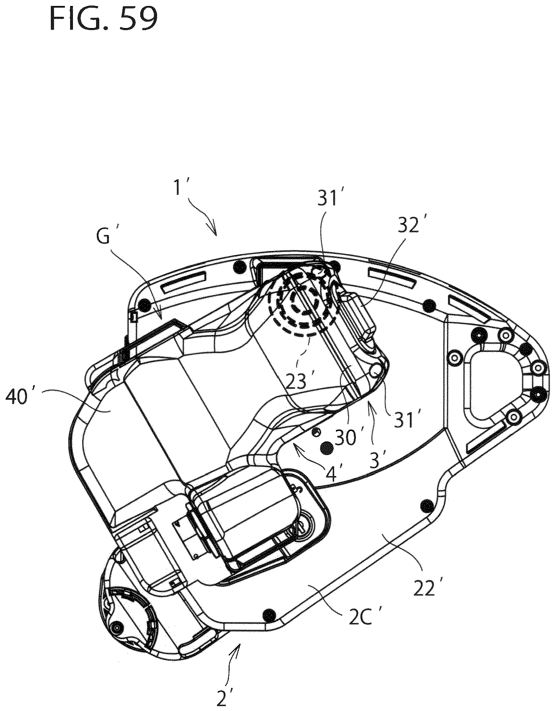

Also, as shown in FIGS. 53 and 60, an emergency stop switch 23' provided at the top portion of the holder body 2' of the tablet holder 1' as a stop switch for outputting a stop signal to the operational object is disposed at the position vertically opposite the grip part 3' (especially, the grip body part 30') on the rear side of the holder body 2'. This is also true in the case that the grip part 3' is rotated to right and left around the neutral position through rotation of the grip unit G' (see FIGS. 58, 59).

The grip body part 30' of the grip part 3', as with the first embodiment, is a part that is gripped by fingers (especially, a second finger $f_2$ to a fifth finger $f_5$) of either a right hand or a left hand of the operator during operation of the tablet holder 1'. During the grip, a first finger $f_1$ of the operator fits in the fitting recess (in FIG. 60, only the fitting recess 31' for the right hand is shown) provided at the side portion of the grip body part 30'.

As shown in FIGS. 53 and 60, when the grip body part 30' is gripped with the left fingers of the operator, the emergency stop switch 23' is preferably disposed at the position vertically opposite the MP (Metacarpophalangeal) joint at the base of the left fingers. That is, the emergency stop switch 23' is vertically overlapped with the MP joint of the hand.

This is also true of the case in which the grip part 3' (and the grip body part 30') is rotated to right and left around the neutral position through rotation of the grip unit G'. In the event that the grip part 3' is rotated to be disposed in the direction shown in FIG. 58, when the grip body part 30' is gripped with a left hand of the operator, the MP joint of primarily a first finger (i.e. a thumb) of the left hand is vertically overlapped with the emergency stop switch 23', and when the grip body part 30' is gripped with a right hand of the operator, the MP joint of primarily a fifth finger (i.e. a little finger) of the right hand is vertically overlapped with the emergency stop switch 23'. Likewise, in the event that the grip part 3' is rotated to be disposed in the direction shown in FIG. 59, when the grip body part 30' is gripped with a left hand of the operator, the MP joint of primarily a fifth finger (i.e. a little finger) of the left hand is vertically overlapped with the emergency stop switch 23', and when the grip body part 30' is gripped with a right hand of the operator, the MP joint of primarily a first finger (i.e. a thumb) of the right hand is vertically overlapped with the emergency stop switch 23'.

Then, functions and effects of the present embodiment will be explained.

When using the aforesaid tablet holder 1', the tablet T' is placed sideways (that is, respective short sides of the tablet T' are placed on the left and right sides) on the base surface 20' (FIG. 53) of the holder body 2' and the tablet T' is held by the holder body 2' through the contact part 21' and the respective retaining members 221, 221'. From this state, when the operator grips the grip part 3' with a left hand and operates the tablet T with a right hand, as shown in FIG. 55, the grip unit G' including the grip part 3' is rotated in the counterclockwise direction by the angle α' (=60° or ≈ 60°) around the longitudinal centerline L of the holder body 2', as viewed from the rear side of the tablet holder 2'.

At this juncture, as shown in FIG. 55, the longitudinal centerline GL of the grip unit G' forms the angle α' relative to the longitudinal centerline L of the holder body 2' and coincides with or generally coincides with the diagonal line direction of the tablet T'. Therefore, the left forearm of the operator gripping the grip part 3' also forms the angle α' relative to the longitudinal centerline L of the holder body 2' and coincides with or generally coincides with the diagonal line direction of the tablet T'.

Also, from the state that tablet T' is held by the holder body 2', when the operator grips the grip part 3' with a right hand and operates the tablet T with a left hand, as shown in FIG. 56, the grip unit G' including the grip part 3' is rotated in the clockwise direction by the angle β'(=60° or ≈60°) around the longitudinal centerline L of the holder body 2', as viewed from the rear side of the tablet holder 2'.

At this juncture, as shown in FIG. 56, the longitudinal centerline GL of the grip unit G' forms the angle β' relative to the longitudinal centerline L of the holder body 2' and coincides with or generally coincides with the diagonal line direction of the tablet T'. Therefore, the right forearm of the operator gripping the grip part 3' also forms the angle β' relative to the longitudinal centerline L of the holder body 2' and coincides with or generally coincides with the diagonal line direction of the tablet T'.

In such a way, since the rotatable angle α' of the grip unit G' in the counterclockwise direction is set at 60 degrees (or approximately 60 degrees) and the rotatable angle β' of the grip unit G' in the clockwise direction is set at 60 degrees (or approximately 60 degrees), in either case in which the grip unit G' is rotated in either direction of the clockwise direction or the counterclockwise direction, the longitudinal centerline GL of the grip unit G' coincides with or generally coincides with the diagonal line direction of the tablet T'. Thereby, even when a comparatively large-sized and heavy tablet T' of 10-13 inches or so is used, it becomes easy to place the tablet T' in an easily viewable direction and the tablet T' can be stably supported by either hand of a right hand or a left hand, thus further alleviating the burden on the body of the operator.

In this embodiment as well, similar to the first embodiment, since the support part 4' in addition to the grip part 3' is provided on the rear side of the holder body 2', when the operator places the tablet T' on the base surface 20' on the front side of the holder body 2' and grips the grip part 3' with a hand, the entire weight of the tablet holder 2' can be supported not only by the hand of the operator through the grip part 3' but also by at least a portion of the forearm of the operator through the support part 4'. A load can thus be dispersed on the hand and the forearm of the operator and a moment of force acting to the forearm can be decreased, thereby alleviating the burden on the body of the operator during operation.

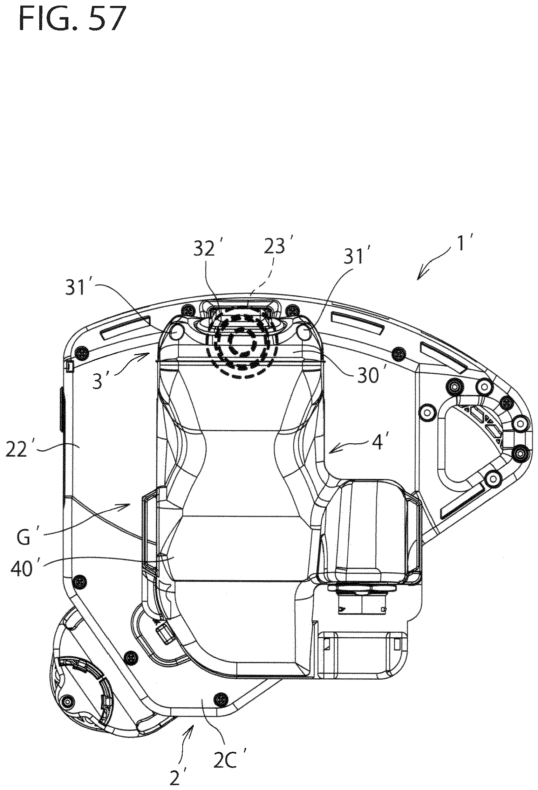

Moreover, according to the present embodiment, the emergency stop switch 23' is disposed at the position vertically opposite the grip part 3' (especially, the grip body part 30') on the rear side of the holder body 2' (FIG. 57), and more preferably, the emergency stop switch 23' is disposed at the position vertically opposite the MP (Metacarpophalangeal) joint at the base of the fingers of the operator when the grip body part 30' is gripped by the fingers. That is, the emergency stop switch 23' is vertically overlapped with the MP joint (FIG. 53). This is also true of the case in which the grip part 3' is rotated to right and left around the neutral position through rotation of the grip unit G' (FIGS. 58, 59).

Thereby, when the operator presses the emergency stop switch 23' with a hand during operation of the tablet holder 1', as shown in FIG. 60, a downward pressing load PW imparted to the emergency stop switch 23' acts toward the grip body part 30' of the grip part 3' on the rear side of the holder body 2' and further toward the MP joint of the other hand of the operator. As a result, when the operator operates the emergency stop switch 23', the emergency stop switch 23' is sandwiched between one hand and the other hand of the operator in the vertical direction (FIG. 53), such that thereby the emergency stop switch 23' can be operated stably and securely, thus enabling to avoid an unstable support condition of the tablet T' due to occurrence of a moment load to the tablet holder 1' at the time of pressing operation of the emergency stop switch 23'.

<Other Alternative Example>

The above-mentioned respective embodiments should be considered in all respects only as illustrative and not restrictive. Those skilled in the art to which the invention pertains may make various modifications and other embodiments employing the principles of the present invention without departing from its spirit or essential characteristics particularly upon considering the foregoing teachings, even if there are no explicit explanations in the description.

## INDUSTRIAL APPLICABILITY

The present invention is of use to a handheld device for detachably holding a portable terminal.

## DESCRIPTION OF REFERENCE NUMERALS

1, 1': tablet holder (handheld device)
2, 2': holder body (device body)
20, 20': base surface
21, 21': contact part

22, 22': backside surface (support part)

3, 3': grip part

30, 30': grip body part

31, 31': side portion

31a, 31'a: fitting recess

4, 4': support part

23, 23': emergency stop switch (stop switch/operation input part)

24: joystick (operation input part)

25: other switches (operation input part)

G, G': grip part

O: center

T, T': tablet (portable terminal)

$T_1$, $T_2$: side surface

$\alpha$, $\alpha$', $\beta$, $\beta$': rotational angle

P: operator

Fa: forearm

$f_1$: first finger

$f_2$-$f_5$: second to fifth finger

Wr: wrist


**Claims**

1. A handheld device for detachably holding a portable terminal comprising:

   a device body having a base surface on a frontside thereof for the portable terminal to be disposed;
   a grip part for an operator to grip by hand that is disposed on a backside of said device body and that is provided to take at least two orientations; and
   a support part that is disposed on the backside of said device body and that is supported from below by at least a portion of a forearm of the operator.

2. The handheld device according to claim 1, wherein there is provided on the frontside of said device body a contact part that a side surface of the portable terminal contacts, and wherein said grip part is rotatable by a predetermined angle from left to right across a neutral position that is disposed parallel to an arrangement direction of said contact part, whereby said grip part takes a first direction and a second direction that diagonally intersect with one another.

3. The handheld device according to claim 2, wherein said grip part is rotatable around a center position or its nearby position of said device body.

4. The handheld device according to claim 1, wherein there is provided on the frontside of said device body a contact part that a side surface of the portable terminal contacts, wherein said grip part is fixed to the backside of said device body and comprises a first grip part disposed in a direction that intersects an arrangement direction of said contact part and a second grip part disposed in a direction that diagonally intersects said first grip part and that intersects said arrangement direction of said contact part.

5. The handheld device according to claim 1, wherein said grip part includes a grip body extending in a longitudinal direction to be gripped by a second to fifth finger of the operator and a fitting recess formed at a side portion of said grip body for a first finger of the operator to fit in.

6. The handheld device according to claim 1, wherein said support part is configured and adapted to contact at least a wrist of the operator.

7. The handheld device according to claim 1, wherein said support part extends in a direction perpendicular to said grip part on the backside of said device body.

8. The handheld device according to claim 1, wherein said support part is integrally formed with said grip part.

9. The handheld device according to claim 8, wherein said grip part is rotatable around a center position or its nearby position of said device body along with said support part.

10. The handheld device according to claim 1, wherein said support part is provided separately from said grip part.

11. The handheld device according to claim 10, wherein said support part is fixed to said device body.

12. The handheld device according to claim 1, wherein said device body includes an operation input part to receive an input operation by the operator.

13. A handheld device for detachably holding a portable terminal comprising:

a device body having a base surface on a frontside thereof for the portable terminal to be disposed;
a grip part for an operator to grip by hand that is disposed on a backside of said device body and that is provided to take at least two orientations; and
a stop switch that is disposed oppositely to said grip part in an up-down direction on the frontside of said device body and that outputs a stop signal to an operational object of said device body.

14. The handheld device according to claim 13, wherein said stop switch is disposed oppositely to a metacarpophalangeal joint of an operator's hand in an up-down direction in the state that said grip part is gripped by the operator's hand.

# FIG. 1

# FIG. 2

# FIG. 3

FIG. 4

## FIG. 5

FIG. 6

# FIG. 7

# FIG. 8

# FIG. 9

# FIG. 10

# FIG. 11

# FIG. 12

# FIG. 13

FIG. 14

## FIG. 15

# FIG. 16

# FIG. 17

FIG. 18

# FIG. 19

# FIG. 20

FIG. 21

# FIG. 22

FIG. 23

FIG. 24

# FIG. 25

# FIG. 26

FIG. 27

FIG. 28

FIG. 29

# FIG. 30

# FIG. 31

# FIG. 32

# FIG. 33

# FIG. 34

# FIG. 35

# FIG. 36

# FIG. 37

FIG. 38

# FIG. 39

# FIG. 40

# FIG. 41

# FIG. 42

## FIG. 43

# FIG. 44

# FIG. 45

FIG. 46

FIG. 47

# FIG. 48

# FIG. 49

# FIG. 50

# FIG. 51

# FIG. 52

# FIG. 53

# FIG. 54

# FIG. 55

## FIG. 56

FIG. 57

# FIG. 58

## FIG. 59

## FIG. 60

## INTERNATIONAL SEARCH REPORT

International application No.

**PCT/JP2022/026921**

**A. CLASSIFICATION OF SUBJECT MATTER**

***B25J 13/02***(2006.01)i; ***H04M 1/11***(2006.01)i
FI: H04M1/11 Z; B25J13/02

According to International Patent Classification (IPC) or to both national classification and IPC

**B. FIELDS SEARCHED**

Minimum documentation searched (classification system followed by classification symbols)

B25J13/02; H04M1/11

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-079539 A (IDEC CORPORATION) 27 May 2021 (2021-05-27) claims 1, 4-8, paragraphs [0019]-[0081], fig. 1-52 | 13-14 |
| Y | claims 1, 4-8, paragraphs [0019]-[0081], fig. 1-52 | 1-3, 5-6, 10-12 |
| A | claims 1, 4-8, paragraphs [0019]-[0081], fig. 1-52 | 4, 7-9 |
| Y | JP 2018-014612 A (SERIZAWA, Hideki) 25 January 2018 (2018-01-25) paragraphs [0022]-[0027], fig. 1-2 | 1-3, 5-6, 10-12 |
| Y | JP 9-085659 A (KAWASAKI HEAVY IND LTD) 31 March 1997 (1997-03-31) paragraphs [0016], [0018], fig. 1, 4 | 5 |

☐ Further documents are listed in the continuation of Box C. ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 August 2022** | **13 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

EP 4 378 640 A1

**INTERNATIONAL SEARCH REPORT**

International application No.

**PCT/JP2022/026921**

| Box No. III    Observations where unity of invention is lacking (Continuation of item 3 of first sheet) |
|---|

This International Searching Authority found multiple inventions in this international application, as follows:

Document 1: JP 2021-079539 A (IDEC CORPORATION) 27 May 2021 (2021-05-27) claim 1 (Family: none)

Claims are classified into the following two inventions.

(Invention 1) Claims 1-12
Claims 1-12 have the special technical feature of comprising a "support part which is located on the rear side of the device body and supported from below by at least a portion of the forearm of an operator," and are thus classified as invention 1.

(Invention 2) Claims 13-14
Claims 13-14 share, with claim 1 classified as invention 1, the common technical feature of comprising: "a device body which has, on the front side, a base surface on which a mobile terminal is placed; and a grip part which is located on the rear side of the device body, configured to perform grasp in at least two directions, and gripped by the operator's hands." However, said technical feature does not make a contribution over the prior art in light of the disclosure of document 1 (in particular, see claim 1), and thus cannot be said to be a special technical feature. Also, there are no other same or corresponding special technical features between the claims 13-14 and claim 1.
In addition, claims 13-14 are not dependent on claim 1. Furthermore, claims 13-14 are not substantially identical to or similarly closely related to any of the claims classified as invention 1.
Also, claims 13-14 have the special technical feature of comprising a "stop switch which is provided at a position, facing vertically the grip part, on the front side of the device body, and outputs a stop signal to an operation target of the device body," and are thus classified as invention 2.

1. ☐  As all required additional search fees were timely paid by the applicant, this international search report covers all searchable claims.

2. ☑  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**    ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (January 2015)

INTERNATIONAL SEARCH REPORT
Information on patent family members

International application No.

**PCT/JP2022/026921**

| Patent document cited in search report | | | Publication date (day/month/year) | Patent family member(s) | Publication date (day/month/year) |
|---|---|---|---|---|---|
| JP | 2021-079539 | A | 27 May 2021 | (Family: none) | |
| JP | 2018-014612 | A | 25 January 2018 | (Family: none) | |
| JP | 9-085659 | A | 31 March 1997 | (Family: none) | |

Form PCT/ISA/210 (patent family annex) (January 2015)

**EP 4 378 640 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021079539 A

- JP 2021011002 A